# EUROPEAN PATENT APPLICATION

(11) **EP 4 422 110 A1**
(43) Date of publication of application: **28.08.2024**
(21) Application number: 24158868.0
(22) Date of filing: 21.02.2024
(51) Int. Cl.: H04L 5/00, H04W 84/12

(54) **METHOD AND APPARATUS FOR SOUNDING IN MAP NETWORK**

(30) Priority: 22.02.2023 KR 20230023792; 07.06.2023 KR 20230073130
(71) Applicant: Samsung Electronics Co., Ltd., Suwon-si, Gyeonggi-do 16677 (KR)
(72) Inventor: KIM, Myeongjin, 16677 Suwon-si, Gyeonggi-do (KR); CHUNG, Chulho, 16677 Suwon-si, Gyeonggi-do (KR); KIM, Jinmin, 16677 Suwon-si, Gyeonggi-do (KR); JEON, Eunsung, 16677 Suwon-si, Gyeonggi-do (KR)
(74) Representative: Kuhnen & Wacker Patent- und Rechtsanwaltsbüro PartG mbB

(57) **Abstract**

An operating method of a first apparatus in a wireless local area network (WLAN) system includes receiving a multiple access point (MAP) network frame from a second apparatus, identifying, from the MAP network frame, joint null data packet (NDP) transmission for MAP sounding and first interleaved subcarriers according to the joint NDP transmission, and based on the joint NDP transmission, transmitting a first NDP to a third apparatus by using the first interleaved subcarriers.

## Description

### BACKGROUND

Aspects of the inventive concept relate to wireless communication, and more particularly, to sounding for channel estimation in a multiple access point (MAP) network of a wireless local area network (WLAN) system.

A WLAN, an example of wireless communication, is a technique for connecting two or more apparatuses by using a wireless signal transmission method and may be based on the institute of electrical and electronics engineers (IEEE) 802.11 standards. The 802.11 standards have developed into the 802.11b, 802.11a, 802.11g, 802.11n, 802.11ac, and 802.11ax standards, etc. and may support a transmission speed of up to 1 Gbyte/s based on orthogonal frequency-division multiplexing (OFDM).

However, as the number of access points (AP) included in a WLAN system has been radically increased in order to provide the WLAN to an even increased number of stations (STA), interference between APs having different basic service sets (BSS) from each other has increased, to cause deterioration of the total performance of the WLAN system. Techniques with respect to a multiple AP network (hereinafter, referred to as an MAP network) have been proposed to reduce interference between APs.

### SUMMARY

Aspects of the inventive concept provide a method and apparatus for efficiently performing multiple access point (MAP) sounding for channel estimation in an MAP network of a wireless local area network (WLAN) system. In particular, aspects of the inventive concept provide a method and apparatus for efficiently performing MAP sounding based on joint null data packet (NDP) transmission in the MAP network.

According to an aspect of the inventive concept, an operating method of a first apparatus in a wireless local area network (WLAN) system includes receiving a multiple access point (MAP) network frame from a second apparatus, identifying, from the MAP network frame, joint null data packet (NDP) transmission for MAP sounding and first interleaved subcarriers according to the joint NDP transmission, and based on the joint NDP transmission, transmitting a first NDP to a third apparatus by using the first interleaved subcarriers.

According to another aspect of the inventive concept, an operating method of a first apparatus in a wireless local area network (WLAN) system includes selecting second apparatuses participating in multiple access point (MAP) sounding as access points (APs) and third apparatuses taking part in the MAP sounding as stations (STAs), selecting a null data packet (NDP) transmission method for the MAP sounding as joint NDP transmission, determining, for each second apparatus, interleaved subcarriers used for transmitting of an NDP, generating an MAP network frame indicating the second apparatuses, the third apparatuses, the joint NDP transmission, and the interleaved subcarriers corresponding to each of the second apparatuses, and transmitting the MAP network frame to the second apparatuses and the third apparatuses.

According to another aspect of the inventive concept, an operating method of a first apparatus in a wireless local area network (WLAN) system includes receiving a multiple access point (MAP) network frame from a second apparatus, obtaining, from the MAP network frame, pieces of information with respect to MAP sounding according to joint null data packet (NDP) transmission, based on the pieces of information with respect to the MAP sounding, simultaneously receiving, from the second apparatus and a third apparatus, a first NDP and a second NDP, respectively, through first interleaved subcarriers and second interleaved subcarriers, respectively, estimating a first channel between the second apparatus and the first apparatus, based on the first NDP and the first interleaved subcarriers, estimating a second channel between the third apparatus and the first apparatus, based on the second NDP and the second interleaved subcarriers, transmitting first MAP sounding feedback indicating the estimated first channel to the second apparatus, and transmitting second MAP sounding feedback indicating the estimated second channel to the third apparatus.

### BRIEF DESCRIPTION OF THE DRAWINGS

Embodiments will be more clearly understood from the following detailed description taken in conjunction with the accompanying drawings in which:
FIG. 1 is a view of a wireless communication system according to an embodiment;
FIG. 2 is a block diagram of a wireless communication system according to an embodiment;
FIGS. 3A and 3B are timing diagrams of multiple access point (MAP) sounding in which joint null data packet (NDP) transmission is implemented, according to an embodiment;
FIG. 4 is a timing diagram of MAP sounding in which serial NDP transmission is implemented, according to an embodiment;
FIGS. 5A and 5B are views for describing an MAP interference reduction operation performed based on pieces of channel state information collected through MAP sounding, according to an embodiment;
FIG. 6 is a flowchart of an operating method of a sharing access point (AP), according to an embodiment;
FIGS. 7A and 7B are flowcharts for describing detailed embodiments with respect to operation S110 of FIG. 6;
FIGS. 8A and 8B are views for describing joint NDP transmission according to an embodiment;
FIG. 9 is a view of an MAP network frame according to an embodiment;
FIG. 10A is a view of a common information field included in the MAP network frame of FIG. 9, and FIG. 10B is a view for describing subcarriers according to a bandwidth;
FIG. 11 is a view of an AP information field included in a MAP network frame of FIG. 7;
FIG. 12A is a view of an embodiment of an interleaved subcarrier indication subfield, and FIGS. 12B and 12C are views for describing the interleaved subcarrier indication subfield of FIG. 12A;
FIG. 13 is a view for describing the interleaved subcarrier indication subfield of FIG. 12A;
FIG. 14 is a view of an embodiment of an interleaved subcarrier indication subfield, and FIG. 15 is a view for describing the interleaved subcarrier indication subfield of FIG. 14;
FIG. 16 is a flowchart of an operating method of a shared AP, according to an embodiment;
FIG. 17 is a flowchart of an operating method of a sharing AP, according to an embodiment;
FIG. 18 is a schematic block diagram of a sharing AP according to an embodiment;
FIG. 19 is a flowchart of an operating method in an MAP network, according to an embodiment;
FIG. 20 is a view of examples of an apparatus for wireless communication according to an embodiment; and
FIG. 21 is a detailed block diagram of an apparatus according to an embodiment.

### DETAILED DESCRIPTION OF THE EMBODIMENTS

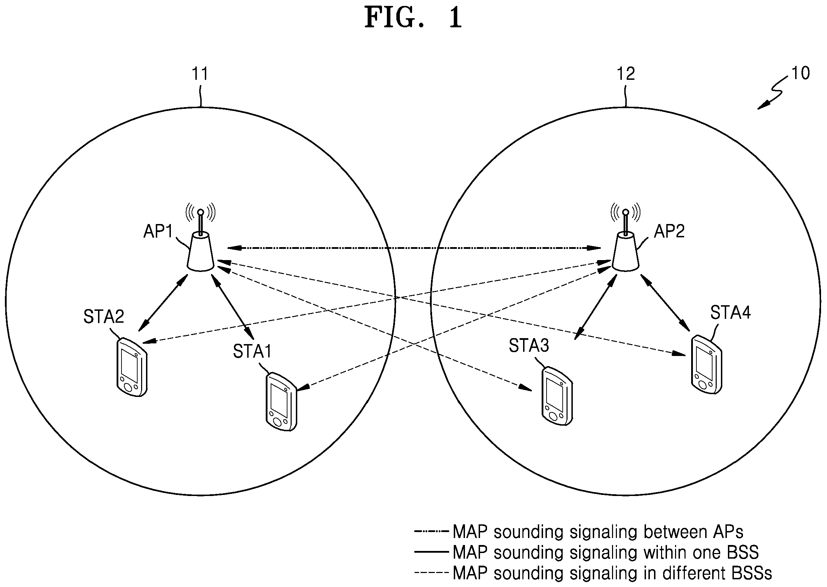

FIG. 1 is a view of a wireless communication system 10 according to an embodiment. In detail, FIG. 1 illustrates a wireless local area network (WLAN) system as an example of the wireless communication system 10.

In describing embodiments in detail, a wireless communication system based on orthogonal frequency division multiplexing (OFDM) or orthogonal frequency division multiplexing access (OFDMA), in particular, the institute of electrical and electronics engineers (IEEE) 802.11 standards, is mainly described. However, the gist of the inventive concept may be applied, with slight modifications not greatly deviating from the scope of the inventive concept, to other communication systems having substantially the same technical backgrounds and channel forms (for example, a cellular communication system, such as long term evolution (LTE), LTE-advanced (LTE-A), new radio (NR), wireless broadband (WiBro), and a global system for mobile communication (GSM), or a short-range communication system, such as Bluetooth and near field communication (NFC)). The range of the modifications may be determined by one of ordinary skill in the art.

Also, various functions described hereinafter may be realized or supported by artificial intelligence (AI) techniques or one or more computer programs, and each of the computer programs may be composed of computer-readable program code and executed on computer-readable media. The terms "application" and "program" refer to one or more computer programs, software components, instruction sets, procedures, functions, objects, classes, instances, and pieces of related data, or part thereof appropriate for realizing appropriate computer-readable program code. The expression "computer-readable program code" includes all types of computer code including source code, object code, and execution code. The term "computer-readable media" refers to all types of media which may be accessed by a computer, such as read-only memory (ROM), random-access memory (RAM), a hard disk drive, a compact disk (CD), a digital video disc (DVD), or other types of memories. "Non-transitory" computer-readable media exclude wired, wireless, optical, or other communication links transmitting transitory electrical or other signals. Non-transitory computer-readable media may include media in which data may be permanently stored and media in which data may be stored and later overwritten, such as a rewritable optical disc or an erasable memory device.

According to some embodiments described hereinafter, a hardware access method is described as an example. However, according to some embodiments, techniques using both hardware and software are provided. Thus, embodiments do not exclude a software-based access method.

The term referring to control information, the term referring to an entry, the term referring to network entities, the term referring to messages, the term referring to elements of a device, etc. used in the description below are given as examples for convenience of explanation. Therefore, the inventive concept is not limited to the terms below, and other terms having the same technical meanings may be used.

Also, in this specification, the expressions "to assign," "to select," "to set," "to determine," etc. may be interpreted to have the same or substantially the same meaning as each other according to a situation of each operation.

Referring to FIG. 1, the wireless communication system 10 may include first and second access points AP1 and AP2, a first station STA1, a second station STA2, a third station STA3, and a fourth station STA4. The first and second access points AP1 and AP2 may access a network including the Internet, an Internet protocol (IP) network, or other arbitrary networks. The first access point AP1 may provide access to a network to the first and second stations STA1 and STA2 in a first basic service set (BSS) 11, and the second access point AP2 may provide access to the network to the third and fourth stations STA3 and STA4 in a second BSS 12. In this specification, a BSS may be understood as a coverage area in which an access point may control access to the network. According to some embodiments, the first and second access points AP1 and AP2 may communicate with at least one of the first to fourth stations STA1 to STA4 based on wireless fidelity (WiFi) or other arbitrary WLAN-access techniques.

An access point may be referred to as a router, a gateway, etc., and a station may be referred to as a mobile station, a subscriber station, a terminal, a mobile terminal, a wireless terminal, user equipment, a user device, etc. The station may be a mobile device, such as a mobile phone, a laptop computer, a wearable device, etc., and may also be a stationary device, such as a desktop computer, a smart television (TV), etc. In this specification, the access point may be interchangeably referred to as the AP and the station may be interchangeably referred to as the STA, for convenience of description.

The first and second access points AP1 and AP2 may assign at least one resource unit (RU) to at least one station first, second, third, or fourth station STA1, STA2, STA3, or STA4. The first and second access points AP1 and AP2 may transmit data through the at least one assigned RU, and the at least one station may receive the data through the at least one assigned RU. In 802.11ax, the first and second access points AP1 and AP2 may assign only a single RU to at least one station. However, in 802.11be (for example, extremely high throughput (EHT)) or the next generation IEEE 802.11 standards (for example, EHT+ or ultra-high reliability (UHR)), the first and second access points AP1 and AP2 may assign a multi-resource unit MRU including two or more RUs to at least one station. For example, the first access point AP1 may assign the MRU to at least one of the first and second stations STA1 and STA2 and may transmit data through the assigned MRU.

The first and second access points AP1 and AP2 and the first to fourth stations STA1 to STA4 may perform communication with each other by using beamforming. For example, the first access point AP1 may perform single-user beamforming with the first station STA1 and may thus improve the reception performance in the communication with the first station STA1, or the first access point AP1 may perform multi-user beamforming with the first and second stations STA1 and STA2 and may thus remove interference between the first station STA1 and the second station STA2 to improve the reception performance in the entire communication with the first and second stations STA1 and STA2.

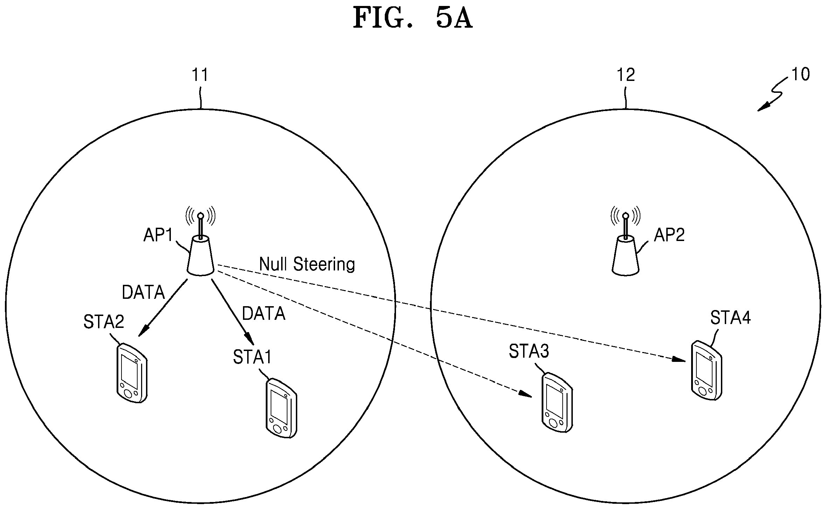

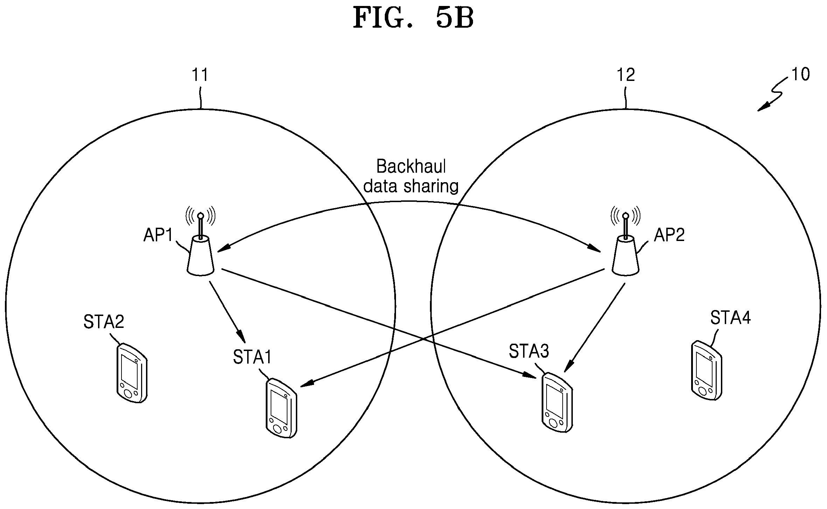

In an environment of a multiple access point (MAP) network (hereinafter, referred to as an MAP network) including the first and second access points AP1 and AP2, communication between the first access point AP1 and the first and second stations STA1 and STA2 in the first BSS 11 may be mutually interfered with communication between the second access point AP2 and the third and fourth stations STA3 and STA4 in the second BSS 12. In order to reduce such interference, the first and second access points AP1 and AP2 may select and perform any one of a coordinated beamforming operation and a joint transmission operation. The coordinated beamforming operation and the joint transmission operation are to be described in detail by referring to FIGS. 5A and 5B.

The first and second access points AP1 and AP2 may need channel state information with respect to stations in other BSSs in order to perform the coordinated beamforming operation or the joint transmission operation. For example, the first access point AP1 may need not only channel state information with respect to the first and second stations STA1 and STA2 in the first BSS 11 but may also need channel state information with respect to the third and fourth stations STA3 and STA4 in the second BSS 12. Also, the second access point AP2 may need not only the channel state information with respect to the third and fourth stations STA3 and STA4 in the second BSS 12 but may also need the channel state information with respect to the first and second stations STA1 and STA2 in the first BSS 11.

The inventive concept provides embodiments by which the first and second access points AP1 and AP2 may obtain the channel state information of the first to fourth stations STA1 to STA4 in the first BSS 11 and the second BSS 12 in order to perform an MAP interference reduction operation for reducing mutual interference. In this specification, the MAP interference reduction operation may be an operation of reducing mutual interference between access points in an MAP network environment and may be defined as an operation additionally requiring channel state information of stations in other BSSs.

In an MAP network including the first and second access points AP1 and AP2 according to an embodiment, MAP sounding for efficiently and effectively obtaining the channel state information from the first to fourth stations STA1 to STA4 in the first and second BSSs 11 and 12 may be performed. In this specification, the MAP sounding may include a plurality of operations for access points participating in the MAP sounding to collect channel state information from stations participating in the MAP sounding.

According to an embodiment, the first access point AP1 and the second access point AP2 may perform MAP sounding signaling. The MAP sounding signaling between the first and second access points AP1 and AP2 may include signaling configured to determine a control subject of the MAP sounding and a transmission and reception operation of an MAP network frame in the MAP sounding. FIG. 1 is described assuming that the first and second access points AP1 and AP2 and the first to fourth stations STA1 to STA4 take part in the MAP sounding. However, it is only an embodiment, and the inventive concept is not limited thereto. The number of access points and the number of stations taking part in the MAP sounding may be adaptively changed.

According to an embodiment, each of the first and second access points AP1 and AP2 may perform MAP sounding signaling in one BSS 11 or 12 controlled by each of the first and second access points AP1 and AP2. For example, the MAP sounding signaling in the first BSS 11 may include a transmission and reception operation with respect to a null data packet (NDP) and a transmission and reception operation with respect to MAP sounding feedback including channel state information between the first access point AP1 and the first and second stations STA1 and STA2. Also, the MAP sounding signaling in the second BSS 12 may include a transmission and reception operation with respect to an NDP and a transmission and reception operation with respect to MAP sounding feedback including channel state information between the second access point AP2 and the third and fourth stations STA3 and STA4.

According to an embodiment, each of the first access point AP1 and the second access point AP2 may perform MAP sounding signaling with the other BSS 12 or 11. For example, the MAP sounding signaling with the other second BSS 12 may include a transmission and reception operation with respect to an NDP and a transmission and reception operation with respect to MAP sounding feedback including channel state information between the first access point AP1 and the third and fourth stations STA3 and STA4. Also, the MAP sounding signaling with the other first BSS 11 may include a transmission and reception operation with respect to an NDP and a transmission and reception operation with respect to MAP sounding feedback including channel state information between the second access point AP2 and the first and second stations STA1 and STA2.

Hereinafter, a series of operations for each MAP subject are described assuming that the first access point AP1 is a control subject of MAP sounding. In this specification, an access point, which is a control subject of MAP sounding, is referred to as a sharing access point (or a sharing AP), and the remaining access point of the MAP sounding may be referred to as a shared access point (or a shared AP).

According to an embodiment, in the MAP sounding signaling between the first access point AP1 and the second access point AP2, the first access point AP1 may be determined as a control subject of the MAP sounding, which exchanges pieces of MAP network-related information including information with respect to the BSS 11 or 12 corresponding to the first access point AP, etc. According to some embodiments, the information with respect to the BSS 11 or 12 may include information with respect to stations included in the corresponding BSS.

First, embodiments are described based on the first access point AP1, which is the sharing access point.

According to an embodiment, the first access point AP1 may determine (e.g., may assign or select) a shared access point participating in the MAP sounding and stations participating in the MAP sounding. FIG. 1 illustrates only the first and second access points AP1 and AP2. However, it is only an embodiment, and an MAP network may include more access points, and in this case, the first access point AP1 may determine shared access points participating in the MAP sounding, from among a plurality of access points. In detail, the first access point AP1 may determine that the second access point AP2 and the first to fourth stations STA1 to STA4 take part in the MAP sounding.

According to an embodiment, the first access point AP1 may determine an NDP transmission method for the MAP sounding. The NDP transmission method may be commonly applied, when the access points taking part in the MAP sounding transmit NDPs to the stations taking part in the MAP sounding. According to an embodiment, the NDP transmission method may include joint NDP transmission and/or serial NDP transmission, wherein according to the joint NDP transmission, the access points simultaneously transmit NDPs to the stations during an NDP transmission period, and according to the serial NDP transmission, the access points sequentially transmit NDPs to the stations in a predetermined order during an NDP transmission period.

According to an embodiment, the joint NDP transmission may implement a method by which the access points coordinate subcarriers used for transmitting the NDPs to be interleaved. In detail, the first access point AP1 may determine interleaved subcarriers to be used by the first and second access points AP1 and AP2 to transmit NDPs. For example, the first access point AP1 may determine that the first access point AP1 is to use first interleaved subcarriers when the first access point AP1 transmits the NDP and may determine that the second access point AP2 is to use second interleaved subcarriers when the second access point AP2 transmits the NDP. That is, the first access point AP1 may assign the first interleaved subcarriers to the first access point AP1 and may assign the second interleaved subcarriers to the second access point AP2 for MAP sounding. The first interleaved subcarriers may not overlap the second interleaved subcarriers.

According to an embodiment, in the joint NDP transmission, interleaved subcarriers may be variously determined or assigned for each access point taking part in the MAP sounding, according to the number of access points taking part in the MAP sounding, a bandwidth assigned for the transmission of the NDP, an NDP type, etc.

Hereinafter, embodiments are described assuming that the first access point AP1 determines the NDP transmission method as the joint NDP transmission.

According to an embodiment, the first access point AP1 may generate an MAP network frame indicating at least one access point and a plurality of stations determined to take part in MAP sounding and indicating the joint NDP transmission and interleaved subcarriers according to the joint NDP transmission. For example, the first access point AP1 may generate the MAP network frame indicating the first and second access points AP1 and AP2 and the first to fourth stations STA1 to STA4 taking part in the MAP sounding, the joint NDP transmission, and the interleaved subcarriers corresponding to each of the first and second access points AP1 and AP2. In this specification, a frame, a field, or a subfield indicating specific information may denote the frame, the field, or the subfield including the specific information.

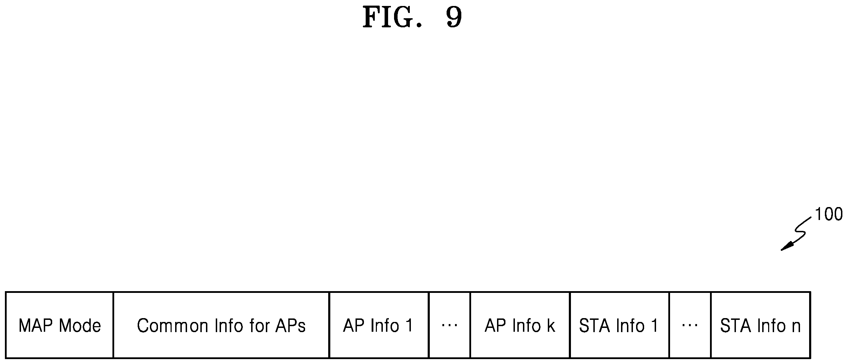

According to an embodiment, in order to start the MAP sounding, the first access point AP1 may transmit the MAP network frame to the second access point AP2 and the first to fourth stations STA1 to STA4 taking part in the MAP sounding. The MAP network frame may include pieces of information that each of the second access point AP2 and the first to fourth stations STA1 to STA4 has to be informed of for the MAP sounding. Each of the second access point AP2 and the first to fourth stations STA1 to STA4 may take part in the MAP sounding based on the MAP network frame. A detailed embodiment with respect to a format of the MAP network frame is described with reference to FIG. 9.

Secondly, embodiments are described based on the second access point AP2, which is a shared access point.

According to an embodiment, the second access point AP2 may identify the joint NDP transmission from the MAP network frame received from the first access point AP1. The second access point AP2 may identify, from the MAP network frame, second interleaved subcarriers for transmission of an NDP. The second access point AP2 may generate the NDP based on NDP-related information included in the MAP network frame. For example, the NDP-related information may include NDP common format information and NDP separate configuration information. The second access point AP2 may determine a format of the NDP based on the NDP common format information and may generate the NDP identified to be transmitted from the second access point AP2 based on the NDP separate configuration information.

According to an embodiment, based on the identified joint NDP transmission, the second access point AP2 may transmit, by using the second interleaved subcarriers, the NDP to the first to fourth stations STA1 to STA4 simultaneously as the first access point AP1 transmits the NDP, during an NDP transmission period. As described above, the first access point AP1 may transmit the NDP to the first to fourth stations STA1 to STA4 by using the first interleaved subcarriers.

Thirdly, embodiments are described based on the first station STA1. Hereinafter, the described embodiments may also be applied to the second to fourth stations STA2 to STA4.

According to an embodiment, the first station STA1 may obtain pieces of information with respect to the MAP sounding from the MAP network frame received from the first access point AP1. The pieces of information with respect to the MAP sounding may include at least one of information needed by the first station STA1 to receive the NDPs transmitted from the first and second access points AP1 and AP2, information needed for channel state estimation using NDPs, information needed to generate pieces of MAP sounding feedback including channel state information, and information needed to transmit the pieces of MAP sounding feedback to the first and second access points AP1 and AP2.

According to an embodiment, the first station STA1 may simultaneously receive the NDPs from the first and second access points AP1 and AP2 based on the pieces of information with respect to the MAP sounding. In detail, the first station STA1 may identify the joint NDP transmission from the pieces of information with respect to the MAP sounding and may accurately receive the NDPs by identifying a reception timing of the NPDs based on the joint NDP transmission.

According to an embodiment, the first station STA1 may generate, based on the pieces of information with respect to the MAP sounding, first MAP sounding feedback transmitted to the first access point AP1 and second MAP sounding feedback transmitted to the second access point AP2.

For example, the first station STA1 may generate first channel state information by estimating a first channel between the first station STA1 and the first access point AP1 by using the NDP received from the first access point AP1 through the first interleaved subcarriers and may generate the first MAP sounding feedback including the first channel state information. In detail, the first station STA1 may estimate first sub-channels corresponding to the first interleaved subcarriers and may interpolate the estimated first sub-channels to estimate second sub-channels corresponding to other subcarriers including the second interleaved subcarriers. The first station STA1 may estimate the first channel based on the estimated first and second sub-channels.

For example, the first station STA1 may generate second channel state information by estimating a second channel between the first station STA1 and the second access point AP2 by using the NDP received from the second access point AP2 through the second interleaved subcarriers and may generate the second MAP sounding feedback including the second channel state information. In detail, the first station STA1 may estimate third sub-channels corresponding to the second interleaved subcarriers and may interpolate the estimated third sub-channels to estimate fourth sub-channels corresponding to other subcarriers including the first interleaved subcarriers. The first station STA1 may estimate the second channel based on the estimated third and fourth sub-channels.

According to an embodiment, the first station STA1 may transmit the first MAP sounding feedback to the first access point AP1 in response to a first MAP trigger frame received from the first access point AP1 and may transmit the second MAP sounding feedback to the second access point AP2 in response to a second MAP trigger frame received from the second access point AP2. In the first station STA1, a transmission timing of the first MAP sounding feedback may be different from a transmission timing of the second MAP sounding feedback.

Based on the same manner, each of the first and second access points AP1 and AP2 may receive the pieces of MAP sounding feedback from the first to fourth stations STA1 to STA4, and the first and second access points AP1 and AP2 may perform an MAP interference reduction operation based on the received pieces of MAP sounding feedback.

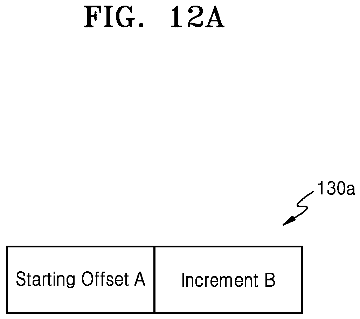

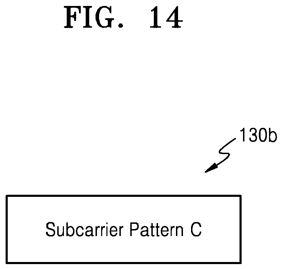

According to an embodiment, the MAP network frame may include an interleaved subcarrier indication subfield for effectively indicating the interleaved subcarriers used for the NDP transmission between the second access point AP2 and the first to fourth stations STA1 to STA4 in the joint NDP transmission. A detailed embodiment with respect to this aspect is to be described below by referring to FIGS. 12A to 12C, FIG. 14, etc.

In the wireless communication system 10 according to an embodiment, the first and second access points AP1 and AP2 included in an MAP network may perform MAP sounding and may obtain, from the first to fourth stations STA1 to STA4, pieces of feedback indicating a channel state, by efficiently using RF resources. Also, the first and second access points AP1 and AP2 may effectively perform the MAP interference reduction operation by using the obtained pieces of feedback, and thus, the entire communication performance may be improved.

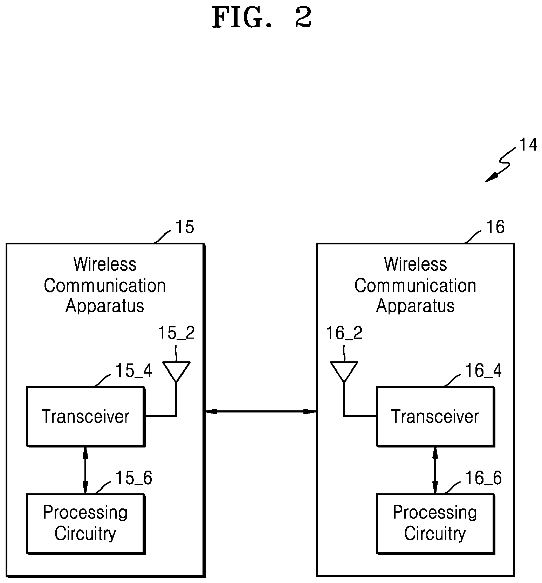

FIG. 2 is a block diagram of a wireless communication system 14 according to an embodiment. In detail, the block diagram of FIG. 2 shows a first wireless communication apparatus 15 and a second wireless communication apparatus 16 communicating with each other in the wireless communication system 14. Each of the first wireless communication apparatus 15 and the second wireless communication apparatus 16 of FIG. 2 may be an arbitrary apparatus communicating in the wireless communication system 14 and may be referred to as an apparatus for wireless communication. According to some embodiments, each of the first wireless communication apparatus 15 and the second wireless communication apparatus 16 may be an access point or a station in a WLAN system.

Referring to FIG. 2, the first wireless communication apparatus 15 may include an antenna 15_2, a transceiver 15_4, and a processing circuit 15_6. According to some embodiments, the antenna 15_2, the transceiver 15_4, and the processing circuit 15_6 may be included in one package (e.g., same semiconductor package) or may be separately included in different packages. The second wireless communication apparatus 16 may also include an antenna 16_2, a transceiver 16_4, and a processing circuit 16_6. Hereinafter, the same descriptions with respect to the first wireless communication apparatus 15 and the second wireless communication apparatus 16 are not repeated.

The antenna 15_2 may receive a signal from the second wireless communication apparatus 16 and provide the signal to the transceiver 15_4 and may transmit a signal provided from the transceiver 15_4 to the second wireless communication apparatus 16. According to some embodiments, the antenna 15_2 may include a plurality of antennas for multiple input multiple output (MIMO). Also, according to some embodiments, the antenna 15_2 may include a phased array for beamforming.

The transceiver 15_4 may process the signal received through the antenna 15_2 from the second wireless communication apparatus 16 and may provide the processed signal to the processing circuit 15_6. Also, the transceiver 15_4 may process a signal provided from the processing circuit 15_6 and may output the processed signal through the antenna 15_2. According to some embodiments, the transceiver 15_4 may include an analog circuit, such as a low noise amplifier, a mixer, a filter, a power amplifier, an oscillator, etc. According to some embodiments, the transceiver 15_4 may process the signal received from the antenna 15_2 and/or the signal received from the processing circuit 15_6 according to control by the processing circuit 15_6.

The processing circuit 15_6 may extract information transmitted by the second wireless communication apparatus 16 by processing the signal received from the transceiver 15_4. For example, the processing circuit 15_6 may extract information by demodulating and/or decoding the signal received from the transceiver 15_4. Also, the processing circuit 15_6 may generate a signal including information to be transmitted to the second wireless communication apparatus 16 and may provide the signal to the transceiver 15_4. For example, the processing circuit 15_6 may provide, to the transceiver 15_4, the signal generated by encoding and/or modulating data to be transmitted to the second wireless communication apparatus 16. According to some embodiments, the processing circuit 15_6 may include a programmable component, such as a central processing unit (CPU), a digital signal processor (DSP), etc., a reconfigurable component, such as a field programmable gate array (FPGA), etc., and a component providing a fixed function, such as an intellectual property (IP) core, etc. According to some embodiments, the processing circuit 15_6 may include a memory storing data and/or a series of instructions or may access the memory.

In this specification, the transceiver 15_4 and/or the processing circuit 15_6 performing operations may be simply referred to as the first wireless communication apparatus 15 performing the corresponding operations. Accordingly, the operations performed by the access point may be performed by the transceiver and/or the processing circuit included in the access point, and the operations performed by the station may be performed by the transceiver and/or the processing circuit included in the station.

According to an embodiment, when the first wireless communication apparatus 15 operates as a sharing access point, the first wireless communication apparatus 15 may generate an MAP network frame for starting MAP sounding and may transmit the generated MAP network frame to the second wireless communication apparatus 16 operating as a shared access point or a station. The MAP network frame according to an embodiment may include at least one subfield for effectively indicating interleaved subcarriers assigned to each of the shared access points in the joint NDP transmission.

According to an embodiment, when the second wireless communication apparatus 16 operates as the shared access point, the second wireless communication apparatus 16 may participate in the MAP sounding by transmitting an NDP to stations in a plurality of BSSs, based on the MAP network frame received from the first wireless communication apparatus 15.

According to an embodiment, when the second wireless communication apparatus 16 operates as the station, the second wireless communication apparatus 16 may participate in the MAP sounding by transmitting MAP sounding feedback to the first wireless communication apparatus 15 based on the MAP network frame and an NDP received from the first wireless communication apparatus 15.

According to an embodiment, some components of the first and second wireless communication apparatuses 15 and 16 may be realized as software so that the operations for the MAP sounding according to embodiments are performed in a medium access control (MAC) layer. According to some embodiments, some components of the first and second wireless communication apparatuses 15 and 16 may be realized as hardware so that the operations for the MAP sounding according to embodiments are performed in a physical (PHY) layer.

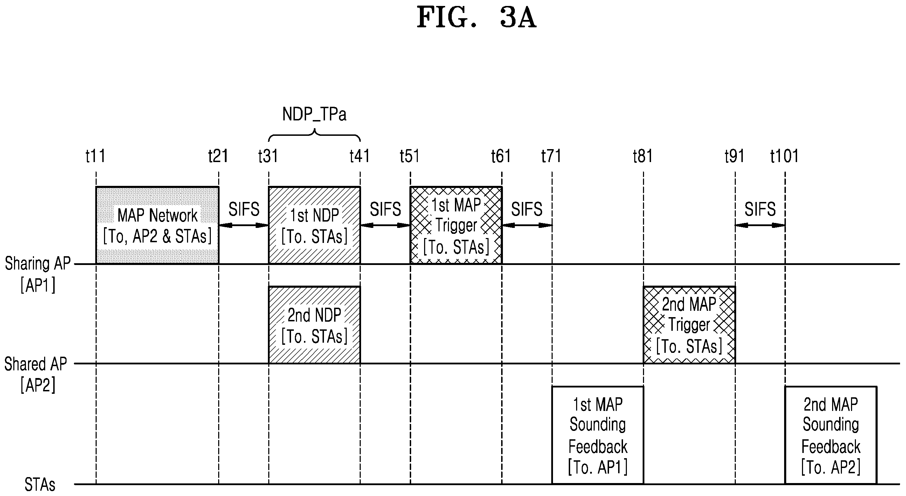

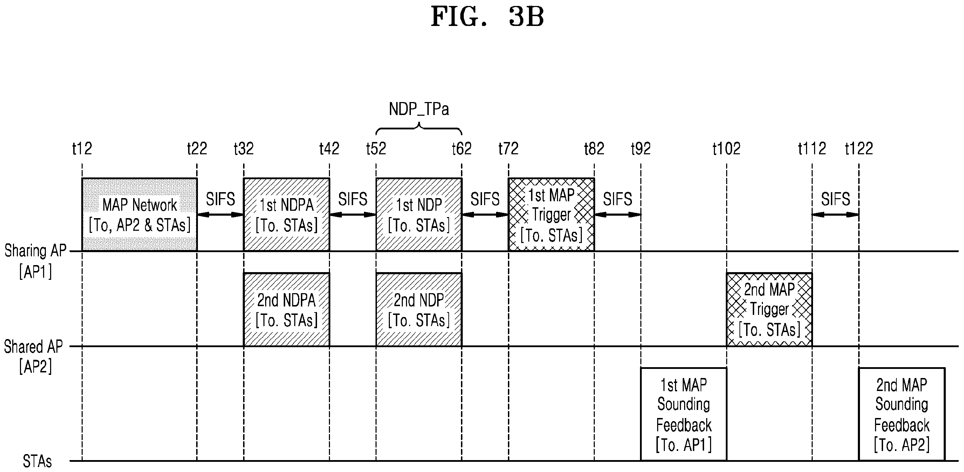

FIGS. 3A and 3B are timing diagrams of MAP sounding in which joint NDP transmission is implemented, according to an embodiment. In FIGS. 3A and 3B, it is assumed that the first access point AP1 is a sharing AP, the second access point AP2 is a shared AP, and the first and second access points AP1 and AP2 and the stations STAs take part in MAP sounding. However, FIGS. 3A and 3B illustrate only embodiments, and the inventive concept is not limited thereto. The inventive concept may also be applied to an MAP network including more shared APs. For convenience of explanation, aspects of FIG. 3B that are the same as the aspects of FIG. 3A are not repeatedly described.

Referring to FIG. 3A, at a time t11, the first access point AP1 may transmit an MAP network frame to the second access point AP2 and the stations STAs. Each of the second access point AP2 and the stations STAs may obtain, from the MAP network frame, pieces of information needed by each of the second access point AP2 and the stations STAs for MAP sounding and may prepare, based on the obtained pieces of information, the MAP sounding.

At a time t31, which is after a short interframe space (SIFS) from a time t21, the first access point AP1 may transmit a first NDP to the stations STAs.

At the time t31, the second access point AP2 may transmit a second NDP to the stations STAs in parallel or simultaneously with the first access point AP1, based on joint NDP transmission identified from the MAP network frame. In detail, during an NDP transmission period NDP_TPa between the time t31 and a time t41, the first and second access points AP1 and AP2 may respectively and simultaneously transmit the first and second NDPs to the stations STAs. For example, in order to avoid interference between the first NDP and the second NDP, first interleaved subcarriers may be used for the transmission of the first NDP and second interleaved subcarriers may be used for the transmission of the second NDP.

The stations STAs may identify the first NDP and the second NDP based on the pieces of information obtained from the MAP network frame. In detail, the stations STAs may identify, from the MAP network frame, the joint NDP transmission, the first interleaved subcarriers corresponding to the first NDP, and the second interleaved subcarriers corresponding to the second NDP. Each of the stations STAs may generate first channel state information by estimating a first channel between the station and the first access point AP1 by using the first NDP and the first interleaved subcarriers. Also, each of the stations STAs may generate second channel state information by estimating a second channel between the station and the second access point AP2 by using the second NDP and the second interleaved subcarriers.

At a time t51, which is after an SIFS from the time t41, the first access point AP1 may transmit a first MAP trigger frame to the stations STAs. For example, the first MAP trigger frame may correspond to a beamforming report poll (BFRP) trigger frame.

At a time t71, which is after an SIFS from a time t61, each of the stations STAs may transmit, to the first access point AP1, first MAP sounding feedback including the first channel state information, in response to the first MAP trigger frame. In this specification, the MAP sounding feedback may also be referred to as an MAP feedback frame.

At a time t81, the second access point AP2 may transmit a second MAP trigger frame to the stations. For example, the second MAP trigger frame may correspond to a BFRP trigger frame.

At a time t101, which is after an SIFS from a time t91, each of the stations STAs may transmit, to the second access point AP2, second MAP sounding feedback including the second channel state information, in response to the second MAP trigger frame.

The first and second access points AP1 and AP2 may perform an MAP interference reduction operation based on the first MAP sounding feedback and the second MAP sounding feedback received from the stations STAs.

Referring further to FIG. 3B, at a time t12, the first access point AP1 may transmit an MAP network frame to the second access point AP2 and the stations STAs. Each of the second access point AP2 and the stations STAs may obtain, from the MAP network frame, pieces of information needed by each of the second access point AP2 and the stations STAs for MAP sounding and may prepare, based on the obtained pieces of information, the MAP sounding.

At a time t32, which is after an SIFS from a time t22, the first access point AP1 may transmit a first null data packet announcement (NDPA) to the stations STAs. Also, at the time t32, the second access point AP2 may transmit a second NDPA to the stations STAs in parallel or simultaneously with the first access point AP1. That is, in the transmission of the first and second NDPAs, the joint NDP transmission according to embodiments may be implemented. In order to avoid interference between the first NDPA and the second NDPA, first interleaved subcarriers may be used for the transmission of the first NDPA and second interleaved subcarriers may be used for the transmission of the second NDPA. However, it is only an embodiment, and the inventive concept is not limited thereto. Each of the first NDPA and the second NDPA may be transmitted through interleaved subcarriers that are different from the interleaved subcarriers through which the first and second NDPs are transmitted.

At a time t52, which is after an SIFS from a time t42, the first access point AP1 may transmit a first NDP to the stations STAs.

At the time t52, the second access point AP2 may transmit, to the stations STAs, a second NDP in parallel or simultaneously with the first access point AP1 based on the joint NDP transmission identified from the MAP network frame.

At a time t72, which is after an SIFS from a time t62, the first access point AP1 may transmit a first MAP trigger frame to the stations STAs.

At a time t92, which is after an SIFS from a time t82, each of the stations STAs may transmit, to the first access point AP1, first MAP sounding feedback including first channel state information with respect to the first access point AP1, in response to the first MAP trigger frame.

At a time t102, the second access point AP2 may transmit a second MAP trigger frame to the stations STAs.

At a time t122, which is after an SIFS from a time t112, each of the stations STAs may transmit, to the second access point AP2, second MAP sounding feedback including second channel state information with respect to the second access point, in response to the second MAP trigger frame.

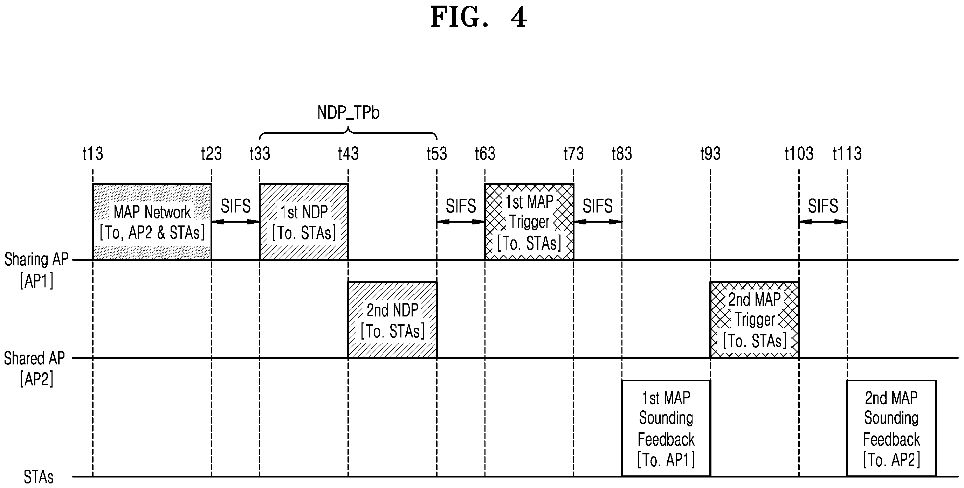

FIG. 4 is a timing diagram of MAP sounding in which serial NDP transmission is implemented, according to an embodiment. In FIG. 4, it is assumed that the first access point AP1 is a sharing AP, the second access point AP2 is a shared AP, and the first and second access points AP1 and AP2 and the stations STAs take part in the MAP sounding. However, FIG. 4 is only an embodiment, and the inventive concept is not limited thereto. The inventive concept may also be applied to an MAP network including more shared APs. For convenience of explanation, aspects of FIG. 4 that are the same as the aspects of FIG. 3A are not repeatedly described.

Referring to FIG. 4, at a time t13, the first access point AP1 may transmit an MAP network frame to the second access point AP2 and the stations STAs. As described above, each of the second access point AP2 and the stations STAs may obtain, from the MAP network frame, pieces of information needed by each of the second access point AP2 and the stations STAs for the MAP sounding and may prepare, based on the obtained pieces of information, the MAP sounding.

At a time t33, which is after an SIFS from a time t23, the first access point AP1 may transmit a first NDP to the stations STAs.

At a time t43, the second access point AP2 may transmit a second NDP to the stations STAs after the first access point AP1 transmits the first NDP, based on serial NDP transmission identified from the MAP network frame. In detail, during an NDP transmission period NDP_TPb between the time t33 and the time t43, the first and second access points AP1 and AP2 may sequentially transmit the first NDP and the second NDP to the stations STAs. In FIG. 4, it is illustrated that the transmission of the first NDP does not temporally overlap the transmission of the second NDP. However, the transmission of the first NDP and the transmission of the second NDP are not limited thereto. An end portion of the transmission of the first NDP may temporally overlap a start portion of the transmission of the second NDP. According to some embodiments, information with respect to an order of the NDP transmission may be included in the MAP network frame.

A length of the NDP transmission period NDP _TPa of FIG. 3A may be less than a length of the NDP transmission period NDP_TPb of FIG. 4. However, when a channel state is not good in an MAP network, the probability in which the stations STAs may not properly receive the first and second NDPs transmitted during the NDP transmission period NDP_TPa may be higher than the probability in which the stations STAs may not properly receive the first and second NDPs transmitted during the NDP transmission period NDP_TPb of FIG. 4. The first access point AP1, which is the sharing AP, may determine an NDP transmission method by taking into account the trade-off as described above.

The stations STAs may identify the first NDP and the second NDP based on the pieces of information obtained from the MAP network frame. Each of the stations STAs may generate first channel state information by estimating a first channel between the station and the first access point AP1 by using the first NDP. Also, each of the stations STAs may generate second channel state information by estimating a second channel between the station and the second access point AP2 by using the second NDP.

At a time t63, which is after an SIFS from a time t53, the first access point AP1 may transmit a first MAP trigger frame to the stations STAs.

At a time t83, which is after an SIFS from a time t73, each of the stations STAs may transmit, to the first access point AP1, first MAP sounding feedback including the first channel state information, in response to the first MAP trigger frame.

At a time t93, the second access point AP2 may transmit a second MAP trigger frame to the stations STAs.

At a time t113, which is after an SIFS from a time t103, each of the stations STAs may transmit, to the second access point AP2, second MAP sounding feedback including the second channel state information, in response to the second MAP trigger frame.

The first and second access points AP1 and AP2 may perform an MAP interference reduction operation, based on the first MAP sounding feedback and the second MAP sounding feedback received from the stations STAs.

FIGS. 5A and 5B are views for describing an MAP interference reduction operation performed based on pieces of channel state information collected through MAP sounding, according to an embodiment. Hereinafter, aspects that are the same as the aspects of FIG. 1 are not described.

FIG. 5A illustrates a coordinated beamforming operation of the first access point AP1. Referring to FIG. 5A, the first access point AP1 may generate beamformed data DATA based on pieces of MAP sounding feedback received, through MAP sounding, from the first and second stations STA1 and STA2 in the first BSS 11 and may transmit the generated beamformed data DATA to the first and second stations STA1 and STA2. Also, the first access point AP1 may perform null steering based on pieces of MAP sounding feedback received, through the MAP sounding, from the third and fourth stations STA3 and STA4 in the second BSS 12. According to the corresponding embodiment, the null steering may be defined as an operation of coordinating a beamforming matrix of a corresponding signal such that the signal transmitted from the first access point AP1 does not interfere with communication between the second access point AP2 and the third and fourth stations STA3 and STA4. For example, the signal transmitted based on the null steering may proceed through a channel between the first access point AP1 and the third station STA3 and then may be measured to have reception power near to 0 in the third station STA3.

FIG. 5B illustrates a joint transmission operation between the first and second access points AP1 and AP2. Referring to FIG. 5B, the first and second access points AP1 and AP2 may perform backhaul data sharing to share data to be transmitted to the first and third stations STA1 and STA3. The first and second access points AP1 and AP2 may perform the joint transmission operation through collaboration based on MAP sounding feedback received, through MAP sounding, from the first station STA1 in the first BSS 11. Also, the first and second access points AP1 and AP2 may perform the joint transmission operation through collaboration based on MAP sounding feedback received, through the MAP sounding, from the third station STA3 in the second BSS 12.

However, FIGS. 5A and 5B are only examples of the MAP interference reduction operation, and the inventive concept is not limited thereto. There may be more examples of the MAP interference reduction operation, and the examples may implement MAP sounding according to embodiments.

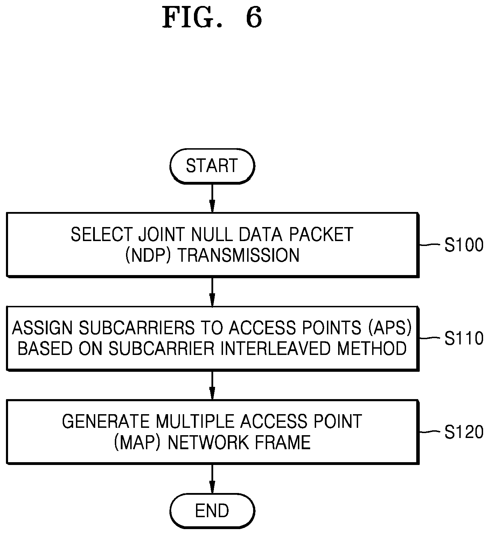

FIG. 6 is a flowchart of an operating method of a sharing AP, according to an embodiment.

Referring to FIG. 6, in operation S100, the sharing AP may select joint NDP transmission. For example, the sharing AP may select the joint NDP transmission from among a plurality of NDP transmission methods. The plurality of NDP transmission methods may include serial NDP transmission, joint NDP transmission, etc. According to some embodiments, the sharing AP may select the joint NDP transmission, when the sharing AP estimates all the channels of an MAP network and identifies that the estimated channels are appropriate for the joint NDP transmission.

In operation S110, the sharing AP may assign subcarriers to APs taking part in MAP sounding, based on a subcarrier interleaving method. The subcarrier interleaving method may be defined as a subcarrier assigning method implemented in the joint NDP transmission method in order to minimize interference between NDPs simultaneously transmitted by the APs. When each of the APs transmits an NDP, the sharing AP may assign the subcarriers to the APs such that each AP may use different interleaved subcarriers. In detail, when the APs taking part in the MAP sounding include a first AP (a sharing AP), a second AP, and a third AP, the first AP (the sharing AP) may assign first interleaved subcarriers to the first AP, second interleaved subcarriers to the second AP, and third interleaved subcarriers to the third AP.

In operation S120, the sharing AP may generate an MAP network frame indicating the joint NDP transmission method selected in operation S100 and the subcarriers assigned in operation S110. The sharing AP may transmit the generated MAP network frame to the APs and STAs taking part in the MAP sounding.

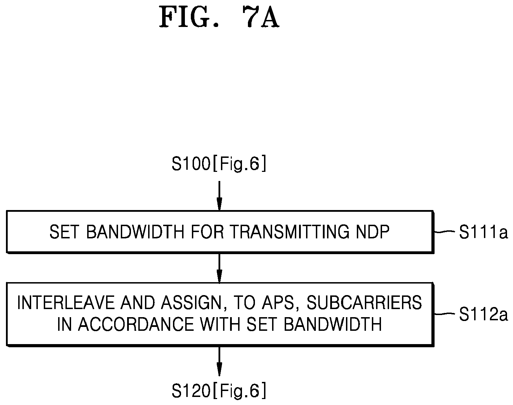

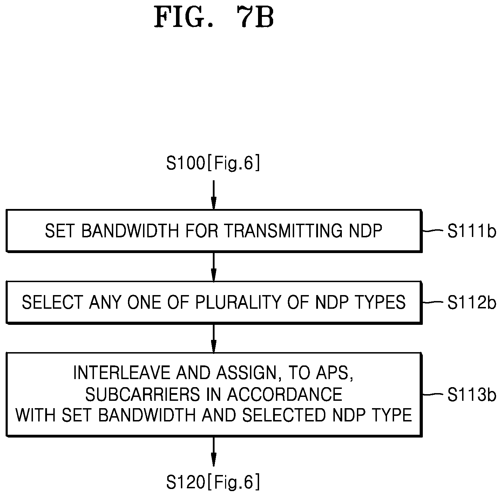

FIGS. 7A and 7B are flowcharts for describing detailed embodiments with respect to operation S110 of FIG. 6.

Referring to FIG. 7A, next to operation S100 (FIG. 6), in operation S111a, the sharing AP may set a bandwidth for transmitting NDPs. For example, the sharing AP may set the bandwidth as any one of 20 MHz, 40 MHz, 80 MHz, 160 MHz, 320 MHz, and 640 MHz.

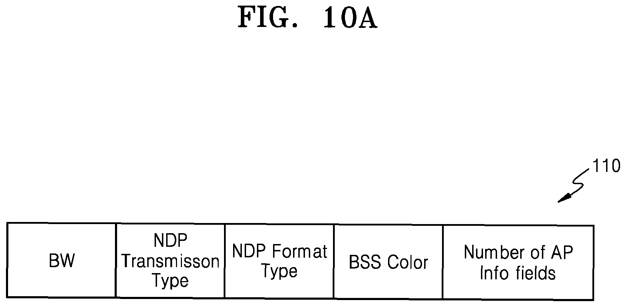

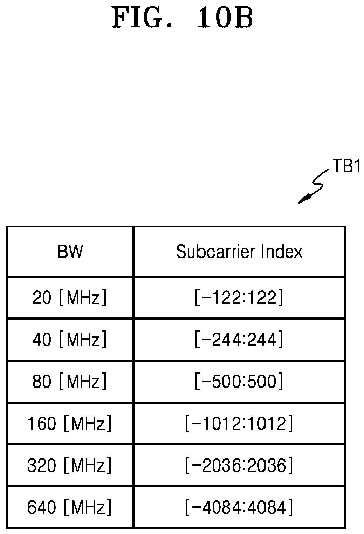

In operation S112a, the sharing AP may interleave and assign, to the APs participating in the MAP sounding, subcarriers in accordance with the bandwidth set in operation S111a. That is, according to the size of the bandwidth, the number of subcarriers and frequency-axis indices of the subcarriers may vary, and thus, the sharing AP may interleave and assign, to the APs, the subcarriers in accordance with the set bandwidth. A detailed embodiment with respect to this aspect is to be described below by referring to FIGS. 10A and 10B.

Next, operation S120 (FIG. 6) may be performed.

Referring further to FIG. 7B, next to operation S100 (FIG. 6), in operation S111b, the sharing AP may set a bandwidth for transmitting NDPs.

In operation S112b, the sharing AP may select any one of a plurality of NDP types. For example, an NDP may include a long training field (LTF) sequence, and an NDP type may correspond to an LTF type. According to a selected NDP type, all or part of subcarriers of the bandwidth set in operation S111b may be used. That is, according to the selected NDP type, the number of subcarriers used for the NDP transmission may vary.

In operation S113b, the sharing AP may interleave and assign, to the APs participating in the MAP sounding, subcarriers in accordance with the bandwidth set in operation S111b and the NDP type selected in operation S112b.

Next, operation S120 (FIG. 6) may be performed.

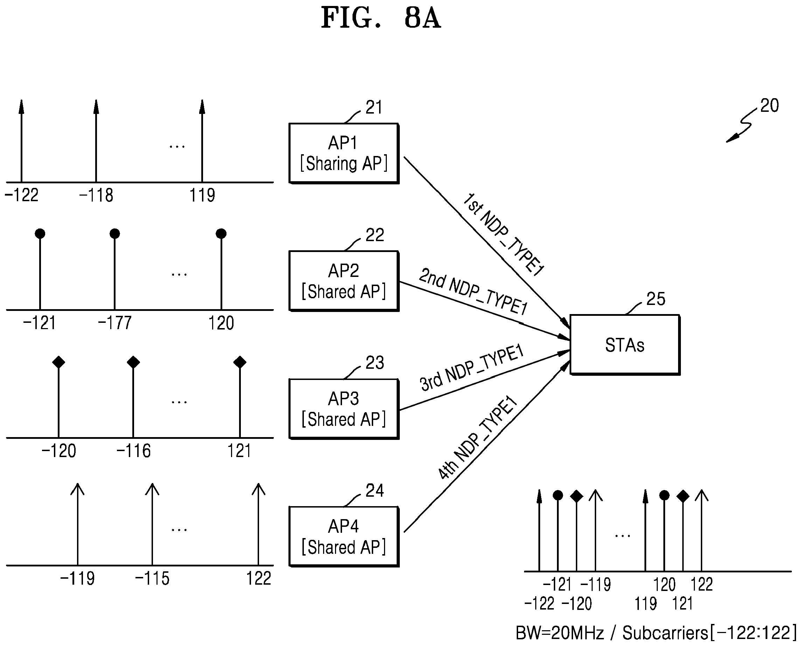

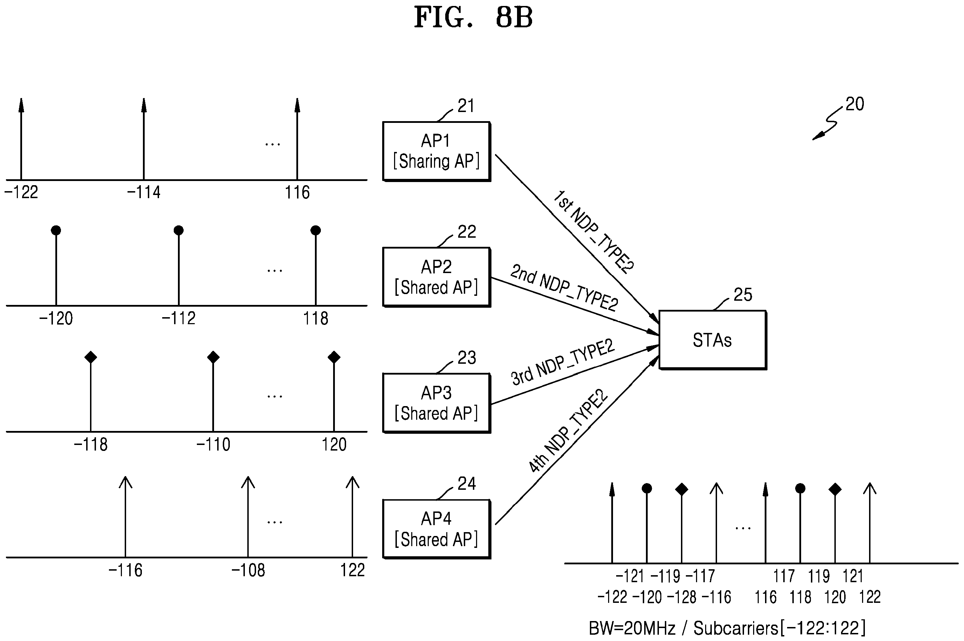

FIGS. 8A and 8B are views for describing joint NDP transmission according to an embodiment. FIG. 8A illustrates an embodiment with respect to transmission of NDPs of a first NDP type, and FIG. 8B illustrates an embodiment with respect to transmission of NDPs of a second NDP type. In FIGS. 8A and 8B, it is assumed that first to fourth APs 21 to 24 and stations 25 may participate in MAP sounding, and a bandwidth of 20 MHz may be set. The first AP 21 may be a sharing AP, and the second to fourth APs 22 to 24 may be shared APs. The bandwidth of 20 MHz may include subcarriers -122, -121, -120, -119, -118, -117,-116, ..., 116, 117, 118, 119, 120, 121, and 122 aligned as indices of a frequency axis. However, FIGS. 8A and 8B illustrate only embodiments to help understand the inventive concept, and it will be sufficiently understood that the inventive concept is not limited to FIGS. 8A and 8B.

Referring to FIG. 8A, for transmission of first to fourth NDPs of the first NDP type, all of the subcarriers -122, -121, -120, -119, -118, -117, -116, ..., 116, 117, 118, 119, 120, 121, and 122 of the bandwidth of 20 MHz may be used. For example, the first AP 21 may transmit the first NDP to the stations 25 by using first interleaved subcarriers -122, -118, ..., 119, the second AP 22 may transmit the second NDP to the stations 25 by using second interleaved subcarriers -121, -117, ..., 120, the third AP 23 may transmit the third NDP to the stations 25 by using third interleaved subcarriers -120, -116, ..., 121, and the fourth AP 24 may transmit the fourth NDP to the stations 25 by using fourth interleaved subcarriers -119, -115, ..., 122. The first AP 21 may generate an MAP network frame indicating the interleaved subcarriers assigned to each of the second to fourth APs 22 to 24 and may transmit the MAP network frame to the second to fourth APs 22 to 24 and the stations 25.

Referring further to FIG. 8B, for transmission of first to fourth NDPs of the second NDP type, half of the subcarriers -122, -121, -120, -119, -118, -117, -116, ..., 116, 117, 118, 119, 120, 121, and 122 of the bandwidth of 20 MHz may be used. For example, the subcarriers -122, -120, -118, -116, ..., 116, 118, 120, and 122 having even numbered-indices of the bandwidth of 20 MHz may be used for the transmission of the first to fourth NDPs of the second NDP type. For example, the first AP 21 may transmit the first NDP to the stations 25 by using first interleaved subcarriers -122, -114, ..., 116, the second AP 22 may transmit the second NDP to the stations 25 by using second interleaved subcarriers -120, -112, ..., 118, the third AP 23 may transmit the third NDP to the stations 25 by using third interleaved subcarriers -118, -110, ..., 120, and the fourth AP 24 may transmit the fourth NDP to the stations 25 by using fourth interleaved subcarriers -116, -108, ..., 122. The first AP 21 may generate an MAP network frame indicating the interleaved subcarriers assigned to each of the second to fourth APs 22 to 24 and may transmit the generated MAP network frame to the second to fourth APs 22 to 24 and the stations 25.

FIG. 9 is a view of the MAP network frame 100 according to an embodiment.

Referring to FIG. 9, the MAP network frame 100 may include an MAP mode field, a common information field with respect to the APs, a plurality of AP information fields, and a plurality of station (STA) information fields. The plurality of AP information fields may include first to k^{th} (k is an integer equal to or greater than 1) AP information fields, and the plurality of STA information fields may include first to n^{th} (n is an integer equal to or greater than 2) STA information fields. The number of AP information fields may correspond to the number of APs participating in MAP sounding, and the number of STA information fields may correspond to the number of STAs participating in the MAP sounding.

According to an embodiment, the MAP mode field may be configured to indicate in which MAP mode the MAP network frame 100 is to operate. For example, MAP modes may include a coordinated-spatial reuse (c-SR) mode, a coordinated-orthogonal frequency division multiplexing (c-OFDMA) mode, a coordinated-beamforming (c-BF) mode, a joint transmission mode, and an MAP sounding mode. In detail, a sharing AP may set, for the MAP mode field, a value to indicate an MAP sounding mode and may notify the MAP sounding mode to the APs and the STAs participating in the MAP sounding.

According to an embodiment, the common information field may include pieces of information commonly needed by the APs to perform the MAP sounding. For example, the corresponding pieces of information may include pieces of information needed by the APs to generate and transmit NDPs. A detailed embodiment with respect to this aspect will be described in detail below with reference to FIG. 10A.

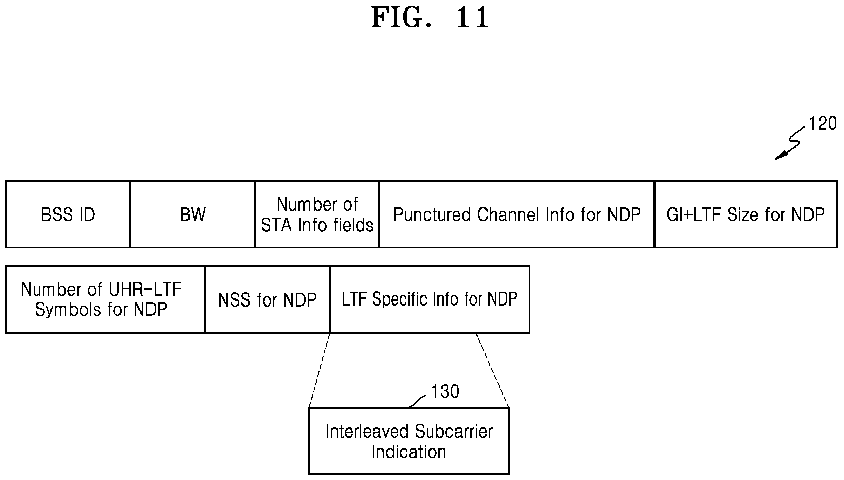

According to an embodiment, the AP information field may include pieces of information needed by an AP having predetermined BSS identification (ID) to generate an NDP. For example, the corresponding pieces of information may include pieces of information for an NDP transmitted from a predetermined AP to be identified by the STAs. A detailed embodiment with respect to this aspect will be described in detail below with reference to FIG. 11.

According to an embodiment, the STA information field may include pieces of information needed by an STA having predetermined STA ID to estimate channel states by using NDPs received from the APs.

According to an embodiment, a shared AP may identify the MAP sounding mode through the value of the MAP mode field of the MAP network frame 100, may identify an NDP transmission method from the common information field of the MAP network frame 100, and may transmit the NDP to the STAs based on the identified NDP transmission method.

However, the MAP network frame 100 of FIG. 9 is only an embodiment, and the inventive concept is not limited thereto. The arrangement order of the fields of the MAP network frame 100 may be variously changed, and the MAP network frame 100 may further include fields needed for the MAP sounding.

The sharing AP may generate pieces of information needed by at least one shared AP and the STAs for the MAP sounding and after appropriately arranging the generated pieces of information in the fields of the MAP network frame 100, may transmit the MAP network frame 100 to the at least one shared AP and the STAs.

Also, the shared AP may identify a value indicating the NDP transmission method from the common information field of the MAP network frame 100, in response to the value of the MAP mode field of the MAP network frame 100, the value indicating the MAP sounding mode.

FIG. 10A is a view of a common information field 110 included in the MAP network frame 100 of FIG. 9, and FIG. 10B is a view for describing subcarriers according to a bandwidth.

Referring to FIG. 10A, the common information field 110 may include a bandwidth (BW) subfield, an NDP transmission-type subfield, an NDP format-type subfield, a BSS color subfield, and an AP information pieces subfield.

According to an embodiment, the BW subfield may indicate BWs of NDPs transmitted from APs. According to some embodiments, when the APs transmit the NDPs by using different BWs from each other, the common information field 110 may omit the BW subfield, and the BW subfield may be included in each of the AP information fields.

According to some embodiments, the NDP transmission-type subfield may indicate a type of the NDP transmission methods. For example, the NDP transmission-type subfield may indicate joint NDP transmission or serial NDP transmission.

According to an embodiment, the NDP format-type subfield may indicate a type of protocol data unit (PPDU) formats of an NDP. For example, the NDP format-type subfield may indicate any one of a type of a format corresponding to UHR sounding and a type of an amended format corresponding to next generation UHR sounding.

According to an embodiment, the BSS color subfield may indicate a value to be set in a BSS color field in a preamble of an NDP, in the case of the joint NDP transmission by which APs simultaneously transmit NDPs.

According to an embodiment, the AP information pieces subfield may indicate the number of APs (including the sharing AP and the at least one shared AP) participating in the MAP sounding.

However, the common information field 110 of FIG. 10A is only an embodiment, and the inventive concept is not limited thereto. The arrangement order of the subfields of the common information field 110 may be variously changed, and the common information field 110 may further include subfields commonly needed for the MAP sounding.

Referring further to a first table TB1 of FIG. 10B, according to a value of the BW subfield, the number of subcarriers and indices of a frequency axis included in a BW may vary. For example, a BW of 20 MHz may include subcarriers having indices of [-122:122], a BW of 40 MHz may include subcarriers having indices of [-244:244], a BW of 80 MHz may include subcarriers having indices of [-500:500], a BW of 160 MHz may include subcarriers having indices of [-1012:1012], a BW of 320 MHz may include subcarriers having indices of [-2036:2036], and a BW of 640 MHz may include subcarriers having indices of [-4084:4084]. As described above, the value of the BW subfield may be needed to interleave and assign, to the APs participating in the MAP sounding, the subcarriers, in the joint NDP transmission.

FIG. 11 is a view of an AP information field 120 included in the MAP network frame 100 of FIG. 9.

Referring to FIG. 11, the AP information field 120 may include a BSS ID subfield, a BW subfield, an STA information pieces subfield, an NDP-related punctured channel information subfield, an NDP-related guard interval (GI) + LTF size subfield, a UHR-LTF symbol pieces subfield, an NDP-related number of spatial stream (NSS) subfield, and an NDP-related LTF specific information subfield.

According to an embodiment, the BSS ID subfield may be configured for an AP having a value of the BSS ID subfield as BSS ID from among APs participating in MAP sounding to identify the corresponding AP information field 120. That is, the AP may identify the AP information field 120 assigned thereto through the BSS ID subfield. According to some embodiments, the BSS ID subfield may be replaced by an MAP ID subfield. For example, the MAP ID subfield may include ID newly assigned to identify the corresponding AP through the MAP sounding signaling performed in advance for the MAP sounding (or MAP communication). However, it is only an embodiment, and the inventive concept is not limited thereto. The BSS ID subfield may be variously realized such that the APs taking part in the MAP sounding may identify the AP information field 120 of the APs.

According to an embodiment, the BW subfield may indicate a BW of an NDP transmitted by the AP having the value of the BSS ID subfield as the BSS ID. According to some embodiments, when the BWs of the NDPs transmitted by the APs are the same, the AP information field 120 may omit the BW subfield, and the BW subfield may be arranged in the common information field 110 of FIG. 10A.

According to an embodiment, the STA information pieces subfield may indicate the number of STAs participating in the MAP sounding from among STAs related to the AP having the value of the BSS ID subfield as the BSS ID. The STAs related to the AP may be understood as STAs in a BSS of the corresponding AP.

According to an embodiment, the punctured channel information subfield may indicate punctured information of the NDP transmitted from the AP having the value of the BSS ID subfield as the BSS ID.

According to an embodiment, the GI+LTF size subfield may indicate a GI duration and a UHR-LTF size of the NDP transmitted from the AP having the value of the BSS ID subfield as the BSS ID. Also, the GI+LTF size subfield may indicate an LTF type. The LTF type may be related to the described NDP type and may be provided in plural. For example, the plurality of LTF types may include a "1x UHR-LTF" type, a "2x UHR-LTF" type, a "4x UHR-LTF" type, etc. The number of subcarriers that are used varies according to the LTF types, and thus, the LTF type indicated in the GI+LTF size subfield may be needed in order to interleave and assign, to the APs participating in the MAP sounding, the subcarriers, in the joint NDP transmission.

According to an embodiment, the UHR-LTF symbol pieces subfield may indicate the number of UHR-LTF symbols of the NDP transmitted from the AP having the value of the BSS ID subfield as the BSS ID.

According to an embodiment, the NSS subfield may indicate the number of spatial streams of the NDP transmitted by the AP having the value of the BSS ID subfield as the BSS ID.

According to an embodiment, the LTF specific information subfield may indicate pieces of specific information needed by the AP having the value of the BSS ID subfield as the BSS ID to generate the NDP. For example, the pieces of specific information may indicate in which order a corresponding shared AP is configured to transmit an NDP in serial NDP transmission, how the subcarriers for NDP transmission are assigned in joint NDP transmission, etc.

According to an embodiment, the LTF specific information subfield may include an interleaved subcarrier indication subfield 130. The interleaved subcarrier indication subfield 130 may be a subfield valid in the joint NDP transmission and may be referred to as a different name and may have a different value in the serial NDP transmission.

According to an embodiment, the interleaved subcarrier indication subfield 130 may indicate interleaved subcarriers assigned to the AP having the value of the BSS ID subfield as the BSS ID for the NDP transmission. A detailed embodiment with respect to this aspect is to be described below by referring to FIGS. 12A to 12C and FIGS 13 to 15.

In this specification, the punctured channel information subfield, the GI+LTF size subfield, the UHR-LTF symbol pieces subfield, and the NSS subfield may be defined as concepts included in separate configurations or separate configuration information for the AP having the value of the BSS ID subfield as the BSS ID to generate the NDP.

However, the AP information field 120 of FIG. 11 is only an embodiment, and the inventive concept is not limited thereto. The arrangement order of the subfields of the AP information field 120 may be variously changed, and the AP information field 120 may further include subfields separately needed by the AP for the MAP sounding.

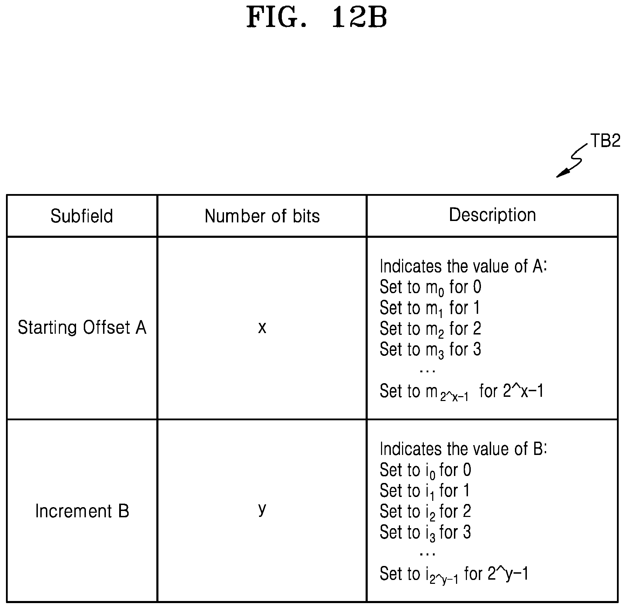

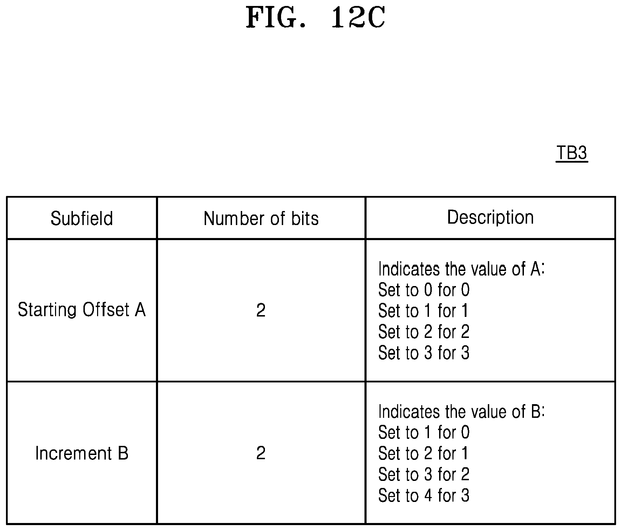

FIG. 12A is a view of an embodiment of an interleaved subcarrier indication subfield 130a, and FIGS. 12B and 12C are views for describing the interleaved subcarrier indication subfield 130a of FIG. 12A.

Referring to FIG. 12A, the interleaved subcarrier indication subfield 130a may include a starting offset subfield and an increment subfield. A value of the starting offset subfield may be defined as a value "A," and a value of the increment subfield may be defined as a value "B."

According to an embodiment, the starting offset subfield may indicate a subcarrier having a lowest index from among interleaved subcarriers, that is, a starting subcarrier, and the increment subfield may indicate a unit distance between the interleaved subcarriers.

For example, when the NDP type is a "1x UHR-LTF" type, the interleaved subcarriers may be indicated in various BWs as below by using the value of "A" and the value of "B" of the interleaved subcarrier indication subfield 130a.
BW=20MHz 1x UHR-LTF: [-122+A: B :122]
BW=40MHz 1x UHR-LTF: [-244+A: B :244]
BW=80MHz 1x UHR-LTF: [-500+A: B :500]
BW=160MHz 1x UHR-LTF: [-1012+A: B :1012]
BW=320MHz 1x UHR-LTF: [-2036+A: B :2036]
BW=640MHz 1x UHR-LTF if 640 MHz BW exists: [-4084+A: B :4084]

In detail, when the value of "A" is "1," and the value of "B" is "2" in the BW of 20 MHz, the interleaved subcarriers may have indices of [-121, -119, -117, -115, ...,).

According to some embodiments, at least one of the value of "A" and the value of "B" may be determined according to the number of APs taking part in the MAP sounding.

Referring further to a second table TB2 of FIG. 12B, the starting offset subfield may include "x" bits, and the increment subfield may include "y" bits.

For example, when a value of the bits of the starting offset subfield is "m₀," the value of "A" may be identified as "0," when the value of the bits is "m₁," the value of "A" may be identified as "1," when the value of the bits is "m₂," the value of "A" may be identified as "2," and when the value of the bits is "m₃," the value of "A" may be identified as "3." Based on this method, when the value of the bits is "m_{2^x-1}," the value of "A" may be identified as "2^x-1."

For example, when a value of the bits of the increment subfield is "i₀," the value of "B" may be identified as "0," when the value of the bits is "i₁," the value of "B" may be identified as "1," when the value of the bits is "i₂," the value of "B" may be identified as "2," and when the value of the bits is "i₃," the value of "B" may be identified as "3." Based on this method, when the value of the bits is "i_{2^y-1}," the value of "B" may be identified as "2^y-1."

Referring further to a third table TB3 of FIG. 12C, the starting offset subfield may include "2" bits, and the increment subfield may include "2" bits, according to the number of APs taking part in MAP sounding and a bandwidth in which NDPs are transmitted.

For example, when a value of the bits of the starting offset subfield is "0," the value of "A" may be identified as "0," when the value of the bits is "1," the value of "A" may be identified as "1," when the value of the bits is "2," the value of "A" may be identified as "2," and when the value of the bits is "3," the value of "A" may be identified as "3."

For example, when a value of the bits of the increment subfield is "1," the value of "B" may be identified as "0," when the value of the bits is "2," the value of "B" may be identified as "1," when the value of the bits is "3," the value of "B" may be identified as "2," and when the value of the bits is "4," the value of "B" may be identified as "3."

However, it is only an embodiment, and the inventive concept is not limited thereto. The starting offset subfield and the increment subfield may be variously realized for effectively indicating the interleaved subcarriers for each AP.

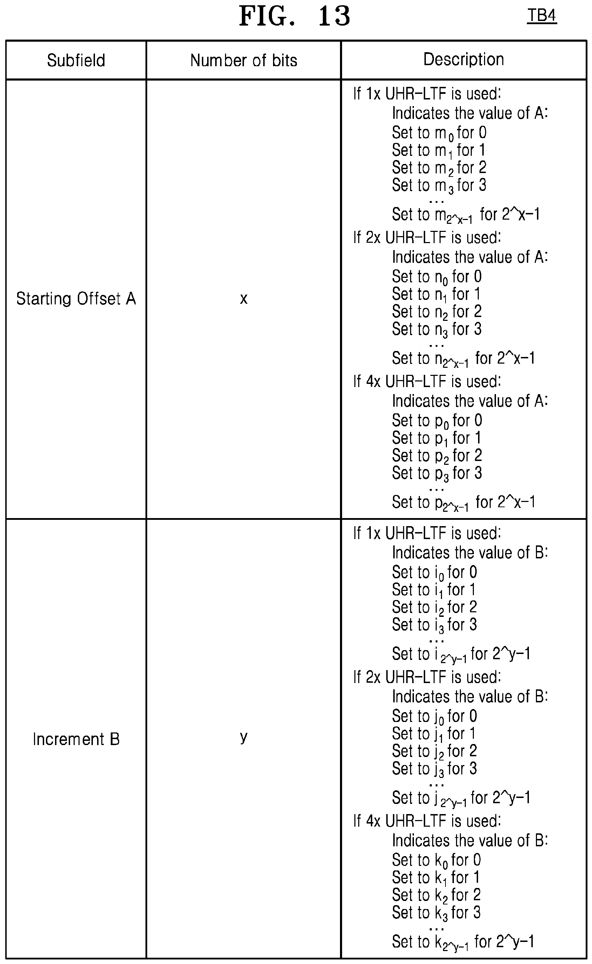

FIG. 13 is a view for describing the interleaved subcarrier indication subfield 130a of FIG. 12A. In FIG. 13, a starting offset subfield and an increment subfield defined by additionally taking into account an NDP type are described.

Referring to FIG. 13, when the NDP type is a "1xUHR-LTF" type, and when a value of the bits of the starting offset subfield is "m₀," the value of "A" may be identified as "0," when the value of the bits is "m₁," the value of "A" may be identified as "1," when the value of the bits is "m₂," the value of "A" may be identified as "2," and when the value of the bits is "m₃," the value of "A" may be identified as "3." Based on this method, when the value of the bits is "m_{2^x-1}," the value of "A" may be identified as "2^x-1." Also, for example, when a value of the bits of the increment subfield is "i₀," the value of "B" may be identified as "0," when the value of the bits is "i₁," the value of "B" may be identified as "1," when the value of the bits is "i₂," the value of "B" may be identified as "2," and when the value of the bits is "i₃," the value of "B" may be identified as "3." Based on this method, when the value of the bits is "i_{2^y-1}," the value of "B" may be identified as "2^y-1."

When the NDP type is a "2xUHR-LTF" type, and when a value of the bits of the starting offset subfield is "n₀," the value of "A" may be identified as "0," when the value of the bits is "n₁," the value of "A" may be identified as "1," when the value of the bits is "n₂," the value of "A" may be identified as "2," and when the value of the bits is "n₃," the value of "A" may be identified as "3." Based on this method, when the value of the bits is "n_{2^x-1}," the value of "A" may be identified as "2^x-1." Also, for example, when a value of the bits of the increment subfield is "j₀," the value of "B" may be identified as "0," when the value of the bits is "j₁," the value of "B" may be identified as "1," when the value of the bits is "j₂," the value of "B" may be identified as "2," and when the value of the bits is "j₃," the value of "B" may be identified as "3." Based on this method, when the value of the bits is "j_{2^y-1}," the value of "B" may be identified as "2^y-1."

When the NDP type is a "4xUHR-LTF" type, and when a value of the bits of the starting offset subfield is "p₀," the value of "A" may be identified as "0," when the value of the bits is "p₁," the value of "A" may be identified as "1," when the value of the bits is "p₂," the value of "A" may be identified as "2," and when the value of the bits is "p₃," the value of "A" may be identified as "3." Based on this method, when the value of the bits is "p_{2^x-1}," the value of "A" may be identified as "2^x-1." Also, for example, when a value of the bits of the increment subfield is "k₀," the value of "B" may be identified as "0," when the value of the bits is "k₁," the value of "B" may be identified as "1," when the value of the bits is "k₂," the value of "B" may be identified as "2," and when the value of the bits is "k₃," the value of "B" may be identified as "3." Based on this method, when the value of the bits is "k_{2^y-1}," the value of "B" may be identified as "2^y-1."

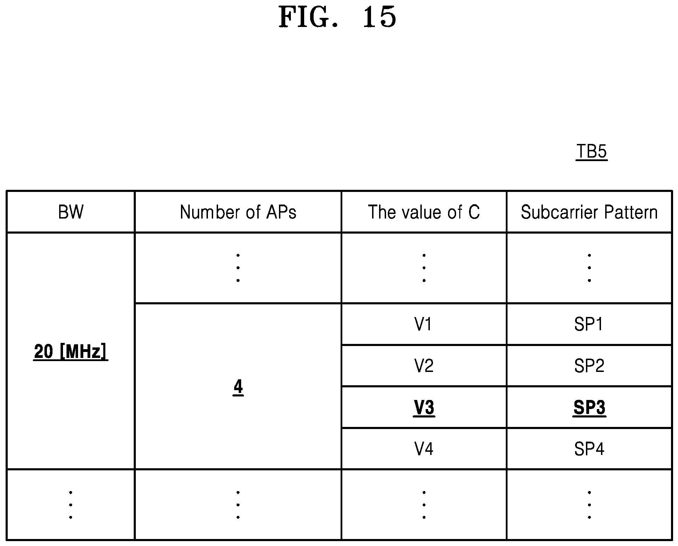

FIG. 14 is a view of an embodiment of an interleaved subcarrier indication subfield 130b, and FIG. 15 is a view for describing the interleaved subcarrier indication subfield 130b of FIG. 14.

Referring to FIG. 14, the interleaved subcarrier indication subfield 130b may include a subcarrier pattern subfield. A value of the subcarrier pattern subfield may be defined as a value "C."

For example, APs included in an MAP network may predetermine a plurality of subcarrier patterns used in joint NDP transmission. According to some embodiments, the APs included in the MAP network may share a plurality of subcarrier patterns through MAP sounding signaling. In this specification, the subcarrier pattern may be defined as including mutually interleaved subcarriers. In detail, a sharing AP may set a value indicating a specific subcarrier pattern as the value "C," and a shared AP may identify the value of "C" of the corresponding subcarrier pattern subfield and identify the specific subcarrier pattern assigned to the shared AP for the NDP transmission. Hereinafter, an embodiment, by which the shared AP identifies a specific subcarrier pattern assigned by the sharing AP, is described in detail.

Referring further to a fifth table TB5 of FIG. 15, the shared AP may identify a BW of 20 MHz from the BW subfield of FIG. 10A and may identify that the number of APs taking part in MAP sounding is "4" from the AP information pieces subfield. By taking into account the fact that the BW is 20 MHz, the number of APs taking part in MAP sounding is "4," and the value of "C" of the subcarrier pattern subfield is "V3," the shared AP may identify a third subcarrier pattern SP3 mapped thereto. Based on this method, from the value of "C" of the subcarrier pattern subfield, which is "V1," "V2," or "V4," the shared AP may identify a first subcarrier pattern SP1, a second subcarrier pattern SP2, or a fourth subcarrier pattern SP4.

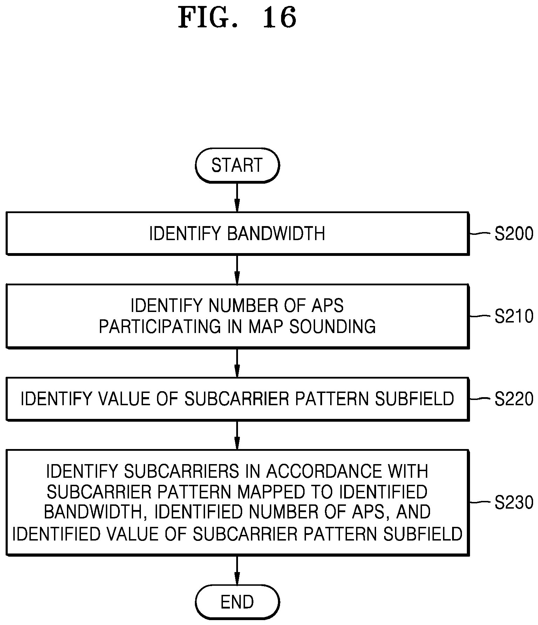

FIG. 16 is a flowchart of an operating method of a shared AP, according to an embodiment.

Referring to FIG. 16, in operation S200, the shared AP may identify a BW for MAP sounding from an MAP network frame.

In operation S210, the shared AP may identify the number or APs taking part in the MAP sounding from the MAP network frame.

In operation S220, the shared AP may identify a value of a subcarrier pattern subfield included in an AP information field of the MAP network frame.

In operation S230, the shared AP may identify subcarriers in accordance with a subcarrier pattern mapped to the BW identified in operation S200, the number of APs identified in operation S210, and the value of the subcarrier pattern subfield identified in operation S220.

The shared AP may transmit an NDP to STAs by using the subcarriers (or interleaved subcarriers) identified in operation S230.

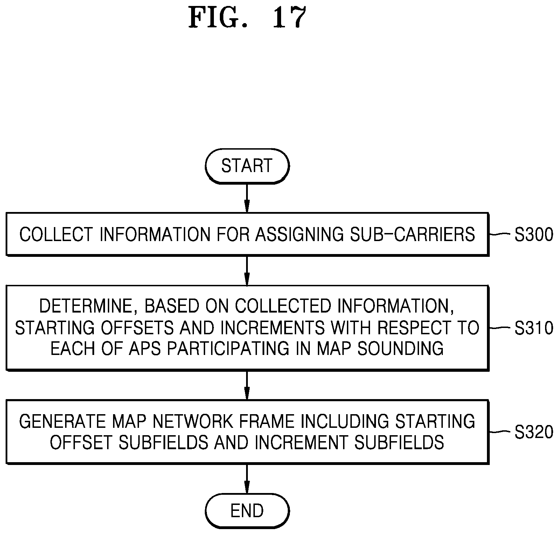

FIG. 17 is a flowchart of an operating method of a sharing AP, according to an embodiment.

Referring to FIG. 17, in operation S300, the sharing AP may collect information for subcarrier assignment. Information with respect to MAP sounding may include at least one piece of information referred to by the sharing AP to perform a subcarrier assigning operation according to a subcarrier interleaving method. For example, the information with respect to the MAP sounding may include at least one of history information with respect to interleaved subcarriers assigned to each of APs taking part in the MAP sounding and state information with respect to an MAP network.

In operation S310, the sharing AP may determine starting offsets and increments with respect to each of the APs taking part in the MAP sounding, based on the information collected in operation S300.

In operation S320, the sharing AP may generate the MAP network frame including starting offset subfields and increment subfields according to the starting offsets and the increments determined in operation S310.

FIG. 17, is described assuming an embodiment of the interleaved subcarrier indication subfield 130a of FIG. 12A. However, it is only an embodiment, and the sharing AP may generate the interleaved subcarrier indication subfield 130b of FIG. 14 by determining a subcarrier pattern for each AP based on the information with respect to the MAP sounding.

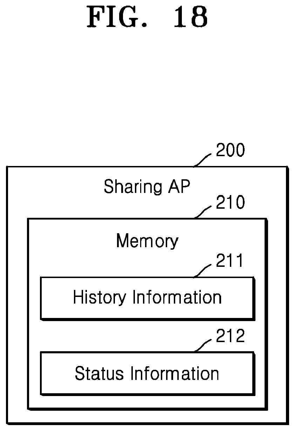

FIG. 18 is a schematic block diagram of a sharing AP 200 according to an embodiment.

Referring to FIG. 18, the sharing AP 200 may include a memory 210, and the memory 210 may store at least one of history information 211 included in information for the subcarrier assignment and status information 212 with respect to an MAP network of FIG. 17.

According to an embodiment, the sharing AP 200 may collect at least one of the history information 211 and the status information 212 before starting MAP sounding. When the sharing AP 200 selects joint NDP transmission, the sharing AP 200 may assign, based on the at least one of the history information 211 and the status information 212, interleaved subcarriers to each of APs taking part in the MAP sounding. For example, based on the history information 211, the sharing AP 200 may assign, to each of the APs taking part in the MAP sounding, the interleaved subcarriers that are the same or substantially the same as interleaved subcarriers previously assigned to each of the APs taking part in the MAP sounding. For example, based on the status information 212, the sharing AP 200 may assign, to each of the APs taking part in the MAP sounding, the interleaved subcarriers that are most appropriate for a current MAP network state.

According to an embodiment, the history information 211 may indicate previous information with respect to the interleaved subcarriers assigned by the sharing AP 200 to the APs taking part in the MAP sounding. The sharing AP 200 may update the history information 211 by accumulating information with respect to the interleaved subcarriers newly assigned to the APs. The history information 211 may be transmitted to an AP (not shown) newly determined to operate as a sharing AP, and the new sharing AP may, based on the history information 211, assign, to the APs taking part in the MAP sounding, the interleaved subcarriers.

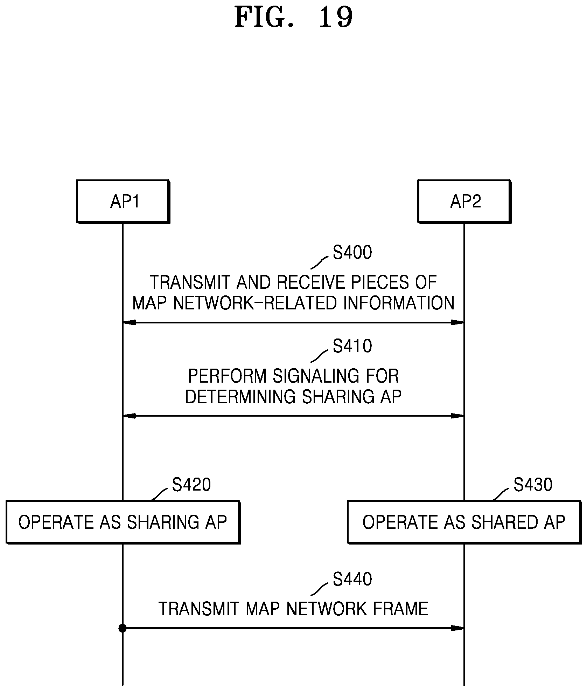

FIG. 19 is a flowchart of an operating method in an MAP network, according to an embodiment. It is assumed that the MAP network includes first and second access points AP1 and AP2.

Referring to FIG. 19, in operation S400, the first and second access points AP1 and AP2 may transceive information with respect to the MAP network.

In operation S410, the first and second access points AP1 and AP2 may perform signaling for determining a sharing AP.

In operation S420, the first access point AP1 may operate as the sharing AP, and in operation S530, the second access point AP2 may operate as a shared AP.

In operation S430, the first access point AP1 may transmit an MAP network frame to the second access point AP2.

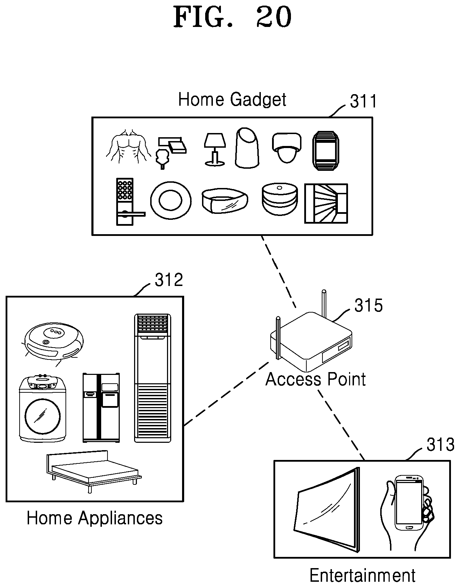

FIG. 20 is a view of examples of an apparatus for wireless communication, according to an embodiment. In detail, FIG. 20 illustrates an Internet of things (IoT) network system including a home gadget 311, a home appliance 312, an entertainment device 313, and an access point 315.

The apparatuses for wireless communication of FIG. 20 may prepare MAP sounding by transmitting and receiving an MAP network frame, as described above with reference to FIGS. 1 to 18. Also, the apparatuses for wireless communication in FIG. 20 may perform the MAP sounding based on an NDP transmission method indicated by the MAP network frame. In detail, when the apparatuses perform the MAP sounding based on joint NDP transmission, interleaved subcarriers assigned to each of APs may be effectively identified through the MAP network frame. Thus, the entire communication throughput of the apparatuses for wireless communication may be improved.

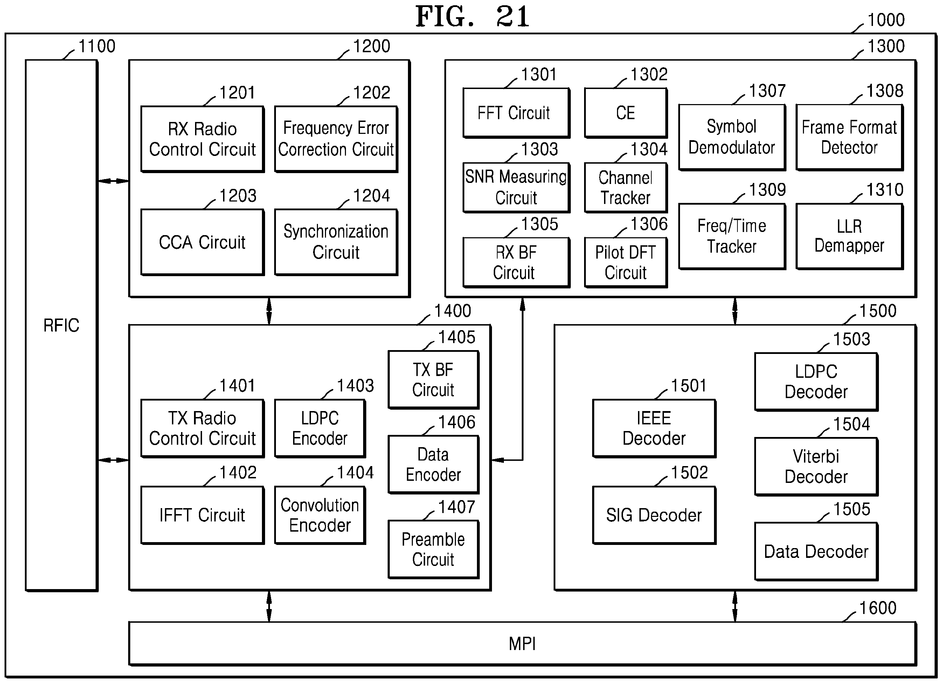

FIG. 21 is a detailed block diagram of an apparatus 1000 according to an embodiment. The apparatus 1000 in FIG. 21 may be the station or the access point described above.

Referring to FIG. 21, the apparatus 1000 may include a radio frequency integrated circuit (RFIC) 1100, a reception circuit 1200, a demodulator 1300, a transmission circuit 1400, a processor 1500, and an MAC-PHY interface (MPI) 1600. FIG. 21 illustrates that each component 1100, 1200, 1300, 1400, 1500, or 1600 is a separate component. However, it is only an embodiment, and the inventive concept is not limited thereto. Part or all of the components 1100, 1200, 1300, 1400, 1500, and 1600 may be realized to be included in a single chip (for example, a modem chip).

The reception circuit 1200 may include a reception (RX) radio control circuit 1201, a frequency error correction circuit 1202, a clear-channel-assessment (CCA) circuit 1203, and a synchronization circuit 1204.

The demodulator 1300 may include a fast Fourier transform (FFT) circuit 1301, a channel estimator (CE) 1302, a signal to noise ratio (SNR) measurement circuit 1303, a channel tracker 1304, an RX beamforming (BF) circuit 1305, a pilot discrete Fourier transform (DFT) circuit 1306, a symbol demodulator 1307, a frame format detector 1308, a frequency/time tracker 1309, and a log-likelihood ratio (LLR) demapper 1310.

The transmission circuit 1400 may include a transmission (TX) radio control circuit 1401, an inverse fast Fourier transform (IFFT) circuit 1402, a low-density parity-check (LDPC) encoder 1403, a convolution encoder 1404, a TX BF circuit 1405, a data encoder 1406, and a preamble circuit 1407.

The processor 1500 may include an IEEE decoder 1501, a signal (SIG) decoder 1502, an LDPC decoder 1503, a Viterbi decoder 1504, and a data decoder 1505.

According to an embodiment, the TX circuit 1400 may generate the MAP network frame described above by using at least one of the components 1401, 1402, 1403, 1404, 1405, 1406, and 1407 of the TX circuit 1400 and may output the MAP network frame through the RFIC 1100. In detail, the MAP network frame may include an interleaved subcarrier indication subfield for effectively indicating interleaved subcarriers assigned to the apparatuses in joint NDP transmission.

According to an embodiment, the processor 1500 may decode the received MAP network frame by using at least one of the components 1501, 1502, 1503, 1504, and 1505 of the processor 1500 and may extract pieces of information needed for MAP sounding. The TX circuit 1400 may generate, based on the pieces of information extracted from the processor 1500, an NDP by using at least one of the components 1401, 1402, 1403, 1404, 1405, 1406, and 1407 of the TX circuit 1400 and may output the NDP through the RFIC 1100 according to the NDP transmission method described above.

According to an embodiment, the demodulator 1300 may estimate a channel state based on the received NDP, by using at least one of the components 1301, 1302, 1303, 1304, 1305, 1306, 1307, 1308, 1309, and 1310 of the demodulator 1300 and may generate channel state information. The TX circuit 1400 may generate MAP sounding feedback including the channel state information, by using at least one of the components 1401, 1402, 1403, 1404, 1405, 1406, and 1407 of the TX circuit 1400, and may output the generated MAP sounding feedback through the RFIC 1100.

While the inventive concept has been particularly shown and described with reference to example embodiments thereof, it will be understood that various changes in form and details may be made therein without departing from the spirit and scope of the following claims.

Ordinal numbers such as "first," "second," "third," etc. may be used simply as labels of certain elements, steps, etc., to distinguish such elements, steps, etc. from one another. Terms that are not described using "first," "second," etc., in the specification, may still be referred to as "first" or "second" in a claim. In addition, a term that is referenced with a particular ordinal number (e.g., "first" in a particular claim) may be described elsewhere with a different ordinal number (e.g., "second" in the specification or another claim).

## Claims

1. An operating method of a first apparatus in a wireless local area network, WLAN, system, the operating method comprising:
receiving a multiple access point, MAP, network frame from a second apparatus;
identifying, from the MAP network frame, joint null data packet, NDP, transmission for MAP sounding and first interleaved subcarriers according to the joint NDP transmission; and
based on the joint NDP transmission, transmitting a first NDP to a third apparatus by using the first interleaved subcarriers.

2. The operating method of claim 1, wherein the transmitting of the first NDP is simultaneously performed with transmitting of a second NDP from the second apparatus to the third apparatus through second interleaved subcarriers.

3. The operating method of claim 1, wherein the identifying of the joint NDP transmission and the first interleaved subcarriers comprises, in response to a first value of an MAP mode field of the MAP network frame, the first value indicating an MAP sounding mode, identifying that the joint NDP transmission is indicated, based on a second value of an NDP transmission type subfield of a common information field of the MAP network frame.

4. The operating method of claim 3, wherein the identifying of the joint NDP transmission and the first interleaved subcarriers further comprises, in response to the second value of the NDP transmission type subfield, the second value indicating the joint NDP transmission, identifying that the first interleaved subcarriers are indicated, based on a third value of an interleaved subcarrier indication subfield of an access point, AP, information field corresponding to the first apparatus from among a plurality of AP information fields of the MAP network frame.

5. The operating method of claim 1, wherein the first interleaved subcarriers are determined based on at least one of a number of apparatuses participating in the MAP sounding in which the first and second apparatuses are included, a bandwidth assigned to the transmitting of the first NDP, and a type of the first NDP.

6. The operating method of claim 1, wherein the MAP network frame includes an interleaved subcarrier indication subfield indicating the first interleaved subcarriers.

7. The operating method of claim 6, wherein the interleaved subcarrier indication subfield includes a starting offset subfield indicating a starting subcarrier of the first interleaved subcarriers and an increment subfield indicating a unit distance of the first interleaved subcarriers.

8. The operating method of claim 7, wherein each of the starting offset subfield and the increment subfield is defined for each NDP type with respect to the first NDP.

9. The operating method of claim 6, wherein the interleaved subcarrier indication subfield indicates a subcarrier pattern in accordance with the first interleaved subcarriers from among a plurality of subcarrier patterns.

10. The operating method of claim 9, wherein the plurality of subcarrier patterns are predetermined between the first apparatus and the second apparatus according to a number of apparatuses taking part in the MAP sounding in which the first and second apparatuses are included and a bandwidth assigned to the transmitting of the first NDP.

11. An operating method of a first apparatus in a wireless local area network (WLAN) system, the operating method comprising:
selecting second apparatuses participating in multiple access point, MAP, sounding as access points, APs, and third apparatuses taking part in the MAP sounding as stations, STAs;
selecting a null data packet, NDP, transmission method for the MAP sounding as joint NDP transmission;
determining, for each second apparatus, interleaved subcarriers used for transmitting of an NDP;
generating an MAP network frame indicating the second apparatuses, the third apparatuses, the joint NDP transmission, and the interleaved subcarriers corresponding to each of the second apparatuses; and
transmitting the MAP network frame to the second apparatuses and the third apparatuses.

12. The operating method of claim 11, wherein the selecting the NDP transmission method as the joint NDP transmission comprises:
determining a bandwidth for the MAP sounding; and
determining a type of the NDP.

13. The operating method of claim 11, wherein the collected information includes at least one of history information with respect to the interleaved subcarriers for each second apparatus and status information with respect to the MAP network.

14. The operating method of claim 11, wherein the MAP network frame includes a plurality of AP information fields in accordance with a number of second apparatuses, and
each of the plurality of AP information fields includes an interleaved subcarrier indication subfield with respect to the interleaved subcarriers.

15. An operating method of a first apparatus in a wireless local area network, WLAN, system, the operating method comprising:
receiving a multiple access point, MAP, network frame from a second apparatus;
obtaining, from the MAP network frame, pieces of information with respect to MAP sounding according to joint null data packet, NDP, transmission;
based on the pieces of information with respect to the MAP sounding, simultaneously receiving, from the second apparatus and a third apparatus, a first NDP and a second NDP, respectively, through first interleaved subcarriers and second interleaved subcarriers, respectively;
estimating a first channel between the second apparatus and the first apparatus, based on the first NDP and the first interleaved subcarriers;
estimating a second channel between the third apparatus and the first apparatus, based on the second NDP and the second interleaved subcarriers;
transmitting first MAP sounding feedback indicating the estimated first channel to the second apparatus; and
transmitting second MAP sounding feedback indicating the estimated second channel to the third apparatus.
